# EUROPEAN PATENT APPLICATION

(11) **EP 2 161 658 A1**
(43) Date of publication of application: **10.03.2010**
(21) Application number: 08163609.4
(22) Date of filing: 03.09.2008
(51) Int. Cl.: G06F 3/147

(54) **Apparatus and method for generating and displaying visual content**

(71) Applicant: Kastrup, Bernardo, 5509 NP Veldhoven (NL)
(72) Inventor: Kastrup, Bernardo, 5509 NP Veldhoven (NL)
(74) Representative: Hatzmann, Martin

(57) **Abstract**

A building element apparatus (100) analogous to a masonry tile or brick comprises: (a) a display (120) comprising a plurality of physical pixels for displaying visual content; (b) an embedded processing system (140) for generating the visual content according to an image generation algorithm; and (c) communication ports (180) for communicating with adjacent building elements. The display is divided into a plurality of display segments (121). The image generation algorithm generates visual content depending on display segment data associated to display segments. The communication ports communicate display segment data associated to display segments with adjacent building elements. The image generation algorithm generates visual content in a way that takes into account display segment data associated to display segments of adjacent building elements. The image generation algorithm preferably generates new display segment data associated to a display segment depending mostly on display segment data associated to nearby display segments.

## Description

### TECHNICAL FIELD

The invention relates to the fields of architecture, interior design, consumer electronics, ambient intelligence, and embedded computing.

### BACKGROUND ART

Traditional masonry bricks and tiles used in architecture and interior design, even when comprising art work (e.g. Portuguese tiles), are visually static in nature. The same holds for traditional wallpaper used to cover entire building surfaces, like walls. Dynamic visual content like video, on the other hand, opens a whole new dimension in architecture and interior design, rendering the building environment alive and responsive. For this reason, architects and interior designers often integrate video into their designs, as discussed e.g. in *"*Intergrating Video into Architecture: Using video to enhance an architectural design will make any project com to life", by Amy Fraley, John Loughmiller, and Robert Drake, in ARCHI.TECH, May/June 2008. When integrating video displays into a building surface like a wall, floor, or ceiling, the effect can be significantly optimized by covering the entire surface with video displays, analogously to what one would do with wallpaper. It is advantageous that such integration is seamless, i.e. that it creates the impression that the visual content displayed merges smoothly into the building surface. The visual content itself must be suitable as a background, helping create the desired atmosphere but not commanding uninterrupted attention from the observer. Finally, the effect of integrating video into a building surface is maximized when the visual content is not predicable or repetitive. Therefore, and since the visual content will often be displayed continuously, it is advantageous that the visual content change often, without significant repetition, and in substantially unpredictable ways.

The success of integrating video into architecture and interior design, however, is limited by (a) the size and aspect ratio of the displays used; (b) the availability of appropriate, sufficiently varied, and properly formatted visual content; and (c) bandwidth, power consumption, and bulk issues related to transmitting visual content from a point of origin to the point where it needs to be displayed. Regarding (a), making displays large enough, and in the right shapes, to cover entire walls like wallpaper is uneconomical and technically impractical due e.g. to manufacturing and logistics issues. Although alternatives exist in the art to combine multiple displays together into an apparently continuous virtual single display (see e.g. http://en.wikipedia.org/wiki/Vido_wall) for use e.g. in large indoor spaces or outdoors, it is impractical and economical, in terms of bulk, cost, power dissipation, etc., to do so in the context of general interior design. Regarding (b), pre-determined visual content like e.g. TV programming or movies will often not have the correct format to fit, without distortions, into the shape of e.g. an arbitrary wall. Moreover, standard TV programming or movies are not suitable as background decoration, since they command uninterrupted attention from the observer. Finally, even when visual content is made specifically for a background application, it is often economically infeasible to produce it in sufficiently large amounts, in the required shapes and aspect ratios, for continuous display without frequent repetition. As a consequence, the visual content would eventually become predictable, which is unattractive and even annoying from an observer's perspective. Regarding (c), solutions have been devised to minimize the amount of redundant visual content that is transmitted, as described e.g. in *"Multi-Tile Video Display System with Distributed CRTC*", by Richard M. Knox and Mark W. Welker, US 6,323,854 B1, of November 27, 2001. However, the underlying problem cannot be solved for as long as the visual content information is produced far from the point where it is to be displayed. The problem is compounded when many displays are used within the practical constraints of a home or office environment.

### DISCLOSURE OF INVENTION

It is an object of the present invention to define a building element apparatus that is analogous in function to a masonry tile or brick, but which: (a) displays visual content comprising visual patterns that are suitable as background decoration and are constantly evolving into new visual patterns in ways at least partly unpredictable from the point of view of a human observer; (b) can be seamlessly combined with other building elements of potentially different shapes and sizes to substantially cover the surface of a wall, ceiling, floor, or any other building surface of arbitrary shape and dimensions; (c) produces its own visual content locally, algorithmically, instead of receiving it from an external source, so to minimize bandwidth and power dissipation issues associated with transmitting visual content over relatively long distances, as well as to ensure that the variety of images displayed is not constrained by the available pre-determined visual content; and (d) fits within the practical constraints of a home or office environment when it comes to heat dissipation, power consumption, bulk, image quality, ease of installation, etc.

The invention is defined by the independent claims. Advantageous embodiments are described in the dependent claims.

According to the present invention, a building element apparatus analogous in function to a masonry tile or brick comprises: (a) a display comprising a plurality of physical pixels for displaying visual content; and (b) an embedded processing system for generating the visual content according to an image generation algorithm. The building element can communicate with one or more adjacent building elements, the building element and the adjacent building elements being preferably arranged together in an assembly so their respective displays form an apparently continuous virtual single display. The surface area of said apparently continuous virtual single display is then the sum of the surface areas of the respective displays of its constituent building elements. By coupling together in an assembly several building elements of potentially different shapes and sizes, one can substantially cover a building surface of arbitrary shape and dimensions. For generating the visual content algorithmically, in the building element itself, the display is divided into a plurality of display segments, each display segment comprising at least one physical pixel. The image generation algorithm then generates visual content for display in different display segments depending on different display segment data respectively associated to said different display segments. The appearance of forming a continuous virtual single display is only achieved when the visual contents displayed in the respective displays of different building elements in the assembly together form an integrated visual pattern spanning multiple displays. Therefore, the visual content displayed in a building element must be visually coherent with the visual contents displayed in adjacent building elements. In order to achieve such visual coherence, the image generation algorithm generates visual content in a way that takes into account display segment data associated to display segments of adjacent building elements. The building element is then arranged to communicate display segment data associated to one or more of its display segments with adjacent building elements. It should be noted that, by generating the visual content algorithmically, two further advantages are secured: (a) algorithms can be defined so as to ensure that the visual content generated is suitable as background decorative imagery; and (b) a virtually unending variety of constantly-evolving visual content can be achieved, without dependence on finite external sources of pre-determined visual content.

In order to maximize flexibility in terms of the variety and complexity of the image generation algorithms that can be used to generate visual content in an assembly of building elements, it is advantageous that a building element be capable of not only communicating display segment data associated to its own display segments to adjacent building elements, but also of passing on display segment data associated to display segments of adjacent building elements to other adjacent building elements.

So to maximize the dynamics, diversity, visual attractiveness, and unpredictability of the visual content generated, in an embodiment the display segment data associated to a display segment comprises a plurality of data comprised in different, preferably overlaying and 2-dimensional arrays of data. It is further advantageous that different, preferably mutually-interacting algorithms operate on the data comprised in different ones of said arrays of data.

To minimize the amount of display segment data associated to display segments that needs to be communicated between building elements, it is advantageous that the image generation algorithm determine the visual content to be displayed in any given display segment depending mostly on display segment data associated to physically nearby display segments. Embodiments wherein the image generation algorithm comprises cellular automaton algorithms are advantageous particularly in this case.

It is further advantageous that a building element be arranged to generate and display visual content in response to external stimuli from the environment, like e.g. sound waves captured by a microphone, control parameters sent from a remote control system and captured by e.g. an infrared sensor, or any other mechanical, chemical, or electromagnetic stimuli. In some applications, it is yet more advantageous that visual content generated in response to the external stimuli capture and represent a part of the topology of the external stimuli, i.e. their similarity and proximity relationships.

Embodiments wherein the image generation algorithm comprises connectionist computational intelligence techniques like fuzzy systems, neural networks, evolutionary computation, swarm intelligence, fractals, chaos theory, etc. add a significant degree of richness and unpredictability to the visual content generated, enhancing the visual effect and broadening the variety of visual patterns that can be generated. In an embodiment, such connectionist computational intelligence techniques are advantageously used. Preferably, the image generation algorithm comprises a network of artificial neurons.

The quality of the visual content displayed can be further refined when, subsequent to a first part of the image generation algorithm, said image generation algorithm further comprises one or more image post-processing steps according to one or more of the many image processing, image manipulation, or computer graphics techniques known in the art. An image post-processing algorithm adds one or more non-trivial transformation steps in between algorithmic elements (like display segment data, images comprising image pixels, etc.) and the visual content itself, i.e. the color/intensity values to be finally displayed in physical pixels of the display. Such algorithms can be advantageously used in an embodiment.

To facilitate the communication of display segment data associated to display segments between adjacent building elements in an assembly, it is advantageous that a building element comprises one or more communication ports that can be electromagnetically coupled to similar communication ports comprised in one or more adjacent building elements. It is further advantageous that said communication ports in a building element, together with connection lines used to connect the communication ports to the embedded processing system, be arranged to form part of a local neighbor-to-neighbor communications network enabling a building element to communicate different data with one or more adjacent building elements simultaneously. In yet another advantageous embodiment, the communication ports and associated connection lines are arranged to form part of a global bus spanning a plurality of building elements in an assembly, so that data, program code, configuration data, control parameters, or any other signal can be broadcasted efficiently across building elements. In a further embodiment, one or more individual communication lines comprised in the communication ports are arranged to form part of a power supply bus that distributes electrical power to building elements in an assembly without requiring separate, external, cumbersome wiring.

There are many advantageous embodiments for the physical realization of a building element. In one such embodiment, the communication port is comprised at the bottom of a cavity on an external surface of the building element; detachable attachment means can then be accommodated into the respective cavities of two adjacent building elements to enable both an electromagnetic as well as a mechanical coupling between said adjacent building elements. In another embodiment, building elements of different shapes and sizes can be coupled together when a building element comprises a plurality of communication ports, potentially along with associated cavities, on a single one of its external surfaces.

Traditional display technologies comprising light sources (like e.g. liquid-crystal displays with back lights, organic light-emitting diodes, plasma, etc.) have limited suitability for covering interior building surfaces due e.g. to power consumption, heat dissipation, decorative conflicts with other lighting arrangements, lack of contrast under daylight or glare conditions, etc. In an embodiment, the present invention avoids such problems by realizing the display with reflective technologies, amongst which electronic paper is preferred due to its image quality and reduced cost. A reflective display produces no light of its own, but simply reflects the environment light the same way wallpaper or any other inert material would. Moreover, since no internal light source is present, a reflective display consumes and dissipates significantly less power than alternative displays.

Other embodiments are described in this description and in the appended claims.

### BRIEF DESCRIPTION OF DRAWINGS

The invention is described in more details and by way of non-limiting examples with reference to the accompanying drawings, wherein:
FIG. 1 schematically depicts the basic architecture of a building element;
FIG. 2 depicts an example physical implementation of a building element;
FIG. 3A-C depict how two building elements can be coupled together in an assembly with the aid of detachable attachment means;
FIG. 4A-B depict how a number of building elements can be coupled together in assemblies to form substantially arbitrarily-shaped and arbitrarily-sized apparently continuous virtual single displays;
FIG. 5 schematically depicts a possible internal architecture of the embedded processing system of a building element;
FIG. 6 schematically depicts how the communication ports and connection lines of a building element can be arranged to form part of a global bus and of a local neighbor-to-neighbor communications network;
FIG. 7 schematically depicts more details of how connections associated to the global bus can be made;
FIG. 8 schematically depicts a possible internal architecture of the embedded processing system with parts of both the global bus and the local neighbor-to-neighbor communications network explicitly illustrated;
FIG. 9 depicts a logical view of how multiple building elements can be coupled together in an assembly through both the global bus and the local neighbor-to-neighbor communications network, and the assembly coupled with an external computer system through the global bus;
FIG. 10 depicts a physical external view of an assembly corresponding to the logical view depicted in FIG. 9;
FIG. 11 depicts an example of how a special-purpose building element comprising sensors can be coupled with an assembly to render the assembly responsive to stimuli from the environment;
FIG. 12A-C depict display segments corresponding to cells (FIG. 12A), as well as an example cell neighborhood illustrated both when said cell neighborhood is fully comprised within a single building element (FIG. 12B) and when it spans multiple building elements (FIG. 12C);
FIG. 13 depicts, in an assembly of nine building elements, an example of all cells which states are required to generate visual content for display in the display of the building element in the center of the assembly;
FIG. 14A-C depict three successive generations of Conway's "Game of Life" cellular automaton being displayed in an assembly of three building elements;
FIG. 15A-C corresponds to FIG. 14A-C, except that now the images displayed are image post-processed with a 2D-interpolation algorithm and a color-map transformation;
FIG. 16A-C depict an assembly of three building elements displaying three successive generations of cellular automata being computed in each building element, wherein two building elements compute Conway's "Game of Life" automaton, while the third building element computes the "Coagulation Rule" automaton;
FIG. 17A-C corresponds to FIG. 16A-C, except that now the images displayed are image post-processed with a 2D-interpolation algorithm and a color-map transformation;
FIG. 18A-B depict two different generations of a wave-propagation continuous cellular automaton displayed in an assembly of three building elements;
FIG. 19 depicts three cells associated to display segments, the states of said cells being determined by a method comprising calculating a distance between a reference vector and an input vector transmitted via the global bus;
FIG. 20A-D depict a spectrogram of an environment sound (FIG. 20A); ten principal components extracted from a part of said spectrogram (FIG. 20B); images displayed in an assembly of four building elements, said images being produced according to the method depicted in FIG. 19 for an input vector which coordinates are determined by the ten principal components depicted in FIG. 20B (FIG. 20C); and an image post-processed version of the images depicted in FIG. 20C after 2D-interpolation and a color-map transformation (FIG. 20D);
FIG. 21A-D are analogous to FIG. 20A-D, but for a different segment of the spectrogram;
FIG. 22A-B depict an example artificial neuron (FIG. 22A) and provides an example of how artificial neurons can be connected together in a neural network and then associated to display segments (FIG. 22B);
FIG. 23 depicts how a display segment can be associated to a plurality of cells in different layers of cells, and how cell neighborhoods can span across said different layers of cells;
FIG. 24A-C depicts how a special-purpose detachable attachment means can be used to hide a connection mechanism of a building element;
FIG. 25A-B depicts a building element with a non-rectangular shape, which can be used for e.g. turning corners while preserving the apparent continuity of the virtual single display surface;
FIG. 26 depicts how multiple building elements in a row or column can be further mechanically bound together by means of a plurality of special-purpose detachable attachment means affixed to a board;
FIG. 27 depicts how a board similar to that depicted in FIG. 26 can itself be affixed to e.g. a wall, ceiling, or floor by means of affixation means like e.g. screws or nails;
FIG. 28A-B depict how building elements analogous in function to masonry tiles can be affixed, via their back surfaces, to support structures that can themselves be affixed to e.g. walls or ceilings by means of e.g. screws;
FIG. 29 depicts how building elements of different shapes and sizes can be used through e.g. the method depicted in FIG. 28 to substantially cover the surface of an irregular wall comprising e.g. a door; and
FIG. 30 depicts how building elements of different shapes and sizes can be coupled together by means of deploying multiple connection mechanisms on a single external surface of a building element.

### MODES FOR CARRYING OUT THE INVENTION

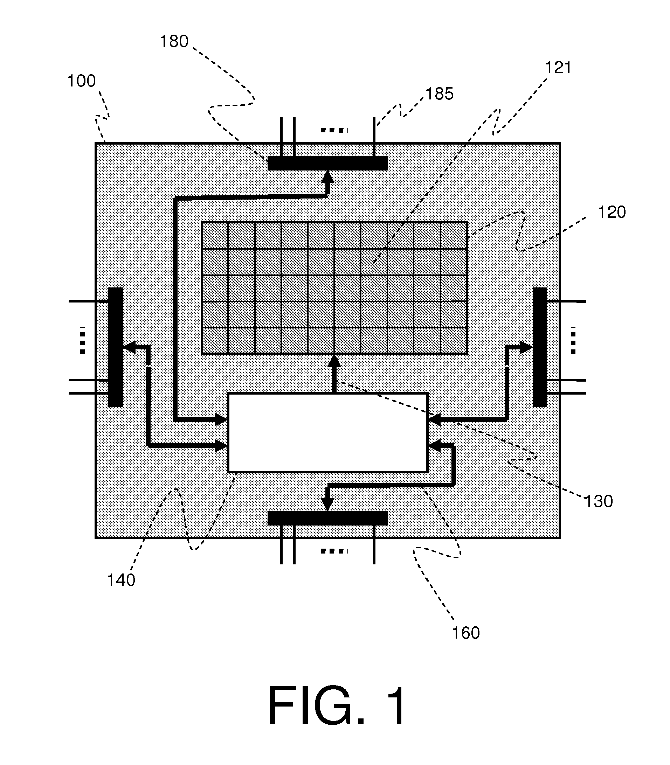

FIG. 1 schematically illustrates the architecture of a building element 100. The building element comprises at least one display 120, which is divided into a plurality of display segments 121. Each display segment 121 comprises at least one but potentially a plurality of the physical pixels comprised in the display 120. The building element 100 also comprises at least one but preferably a plurality of communication ports 180. Each communication port 180 preferably comprises a plurality of individual communication lines 185, wherein each communication line 185 carries an individual electromagnetic signal, said signal being analog or digital. The building element 100 also comprises an embedded processing system 140 connected to at least one but preferably all of the communication ports 180 through connection lines 160, and also connected to the display 120 through connection line 130. Connection lines 160 and 130 carry at least one but preferably a plurality of parallel electromagnetic signals. Based on algorithms preferably stored in it, and on data received from the communication ports 180 via connection lines 160, the embedded processing system 140 generates visual content to be sent via connection line 130 to the display 120 for display. The embedded processing system 140 also sends at least some of the data it produces to one or a plurality of other building elements (not shown in FIG. 1) connected to building element 100 through communication ports 180.

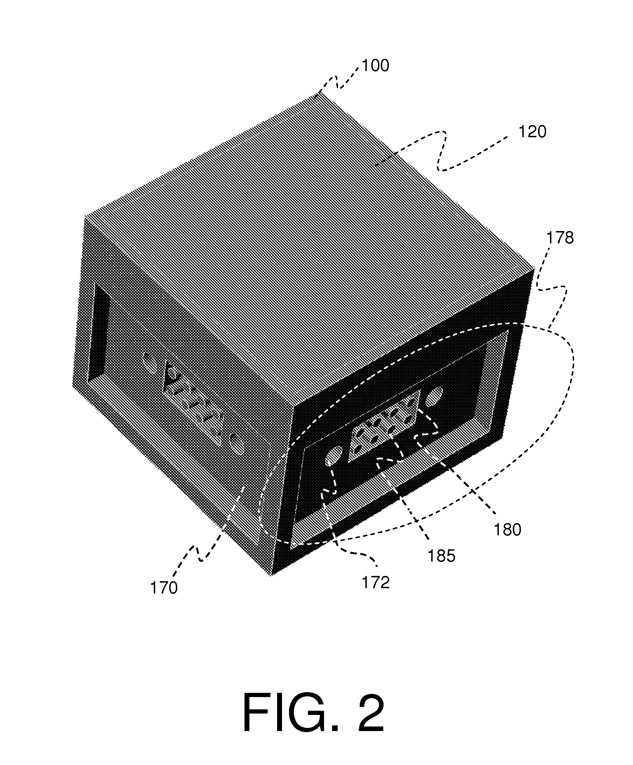

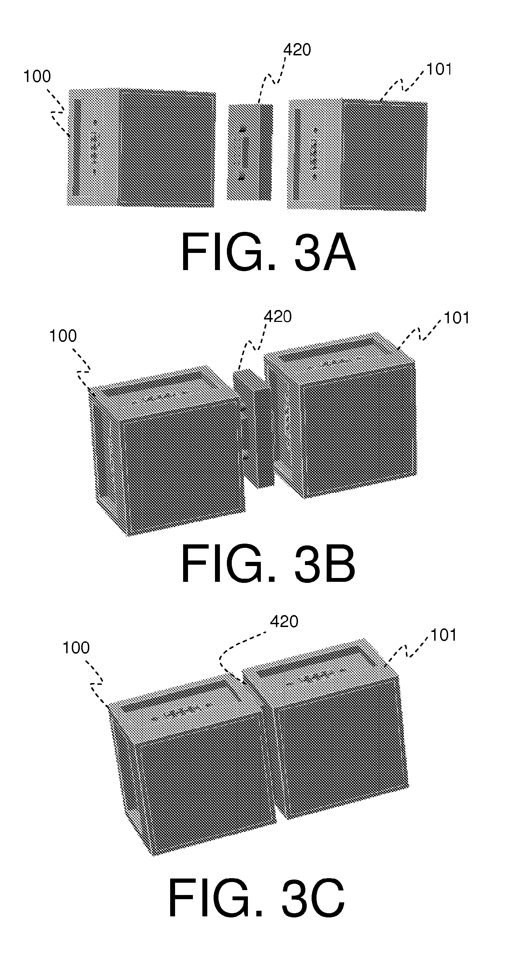

FIG. 2 illustrates an external 3D view of an example physical realization of a building element 100, comprising at least one display 120 on one of its external surfaces. In some applications it can be advantageous to use multiple displays on multiple external surfaces. The shape and aspect ratio of the building element 100 illustrated in FIG. 2 are appropriate when said building element is used analogously to a masonry brick, i.e. when an assembly of said building elements itself forms e.g. a wall. This is advantageous for e.g. constructing partitioning walls that bear no structural load. The entire thickness of the wall can then be used by the internal hardware elements of the building element, which is not possible when the building element is used analogously to e.g. a masonry tile. Moreover, it can be advantageous to use two different displays on opposite external surfaces of the building element so that both sides of the wall display dynamic visual content. However, many other different building element shapes and aspect ratios are possible without departing from the scope of the present invention, some of which are more appropriate for when building elements are used analogously to a tile, i.e. when they are affixed to a pre-existing building surface like a wall, floor, or ceiling. An external surface of building element 100 also preferably comprises a cavity 170. In addition, an external surface of building element 100 may comprise one or more holes 172. Cavity 170 and holes 172, as it will become clear in FIG. 3, contribute to the mechanical stability of the coupling between two adjacent building elements. Finally, an external surface of building element 100 preferably further comprises a communication port 180, with its constituent individual communication lines 185. Individual communication lines 185 are preferably made out of a conductive metal. The cavity 170, holes 172, and the communication port 180 with associated individual communication lines 185 on an external surface of a building element are collectively comprised in a connection mechanism 178. A building element preferably has at least one connection mechanism 178 on at least one of its external surfaces. The connection mechanism 178 ensures that two adjacent building elements are mechanically as well as electromagnetically coupled along their corresponding external surfaces. In a possible embodiment, two holes 172 on an external surface of a building element perform a double function: besides being means for increasing the mechanical stability of a connection between two adjacent building elements, they can also be used to carry e.g. electrical power to a building element (positive and negative electrical polarities, respectively). More generally, any element in a connection mechanism 178 could perform both a mechanical function and a communications function.

The display is preferably a reflective display. Display technologies with integrated light sources (e.g. liquid-crystal displays with back lights, organic light-emitting diodes, plasma, etc.) have limited suitability for covering interior building surfaces for a number of reasons, including: (a) the integrated light sources consume and dissipate significant power. When deploying a large number of those devices to cover entire walls or ceilings, the power consumption (and corresponding electricity bill) becomes a limiting factor for a normal home or office application. In addition, when a large number of those devices are placed in very close proximity to one another, and in very close proximity to a wall, power dissipation becomes an issue. Finally, bringing the necessary amount of electrical current to power a large assembly of those devices poses installation and bulk-related challenges; (b) Display devices that emit their own light can conflict with other decorative lighting arrangements in the environment (e.g. directed lighting, luminaries, etc.). They can project undesired light, shadows, and colors onto the environment. Finally, they can be disturbing when e.g. dim or localized lighting is desired; (c) Display devices with integrated light sources tend to have poor image quality under glare or daylight conditions, so their applicability is more limited. It is acceptable to e.g. close the curtains of a certain room when watching television, but it wouldn't be acceptable to have to do so for the purposes of the present invention, since it is targeted at continuous background decoration; etc. By using reflective display technology, all of said problems are mitigated. Reflective displays simply reflect the incident environment light like any inert material such as wallpaper or plaster. They do not project undesired light, shadows, or colors onto the environment, and do not conflict with other lighting arrangements. They have excellent image quality even under direct sun light conditions. Since there is no integrated light source, their energy consumption and associated power dissipation are reduced, facilitating installation and significantly reducing running costs. Finally, since there is no integrated light source, they can be made thinner than other displays, which is advantageous when the building element is used analogously to a masonry tile. Reflective display technologies known in the art include e.g. electronic paper, which can be based on electrophoretic ink and electro-wetting technology, amongst several other alternatives. Electronic paper is a preferred technology due to its high image quality under glare and daylight conditions, as well as reduced cost.

FIG. 3 A to C illustrate, in chronological order, how two adjacent building elements 100 and 101 can be coupled together through the use of detachable attachment means 420. Detachable attachment means 420 performs both a mechanical role - ensuring the coupling between the two building elements is mechanically stable - and a communications role - ensuring that, through detachable attachment means 420, the respective communication ports (180) of the coupled building elements can communicate with one another. In an analogy with masonry bricks or tiles, detachable attachment means 420 is analogous to masonry mortar. Detachable attachment means 420 is preferably designed so to be physically accommodated into the cavities (170) of the respective coupled building elements. Detachable attachment means 420 is also preferably designed so its connectors are complementary to the individual communication lines (185) comprised in the communication ports (180) of the respective coupled building elements, i.e. where the communication ports have male individual communication lines, detachable attachment means 420 will have corresponding female connectors, and vice-versa. The detachable attachment means 420 is preferably designed so that each individual communication line (185) in a communication port (180) of a first building element gets electromagnetically coupled to the corresponding individual communication line (185) in a communication port (180) of a second building element coupled to said first building element. As illustrated in FIG. 3C, the detachable attachment means 420 is preferably designed so to "disappear" within the cavities (170) of the two adjacent building elements 100 and 101 once said two building elements are pressed together. This way, once building elements 100 and 101 are completely coupled, detachable attachment means 420 will no longer be visible from the outside. Detachable attachment means 420 is preferably made mostly of a robust but elastic material with mechanical properties similar to rubber, so to enable a firm mechanical coupling while being flexible enough to allow for a degree of compression and bending. This way, a building element can be coupled to multiple other building elements along multiple ones of its external surfaces.

The key advantage of coupling two building elements (100, 101) through separate detachable attachment means (420), as opposed to directly coupling them together through complementary connection mechanisms (178) of different types - e.g. male/female - is that a single building element configuration is sufficient wherein all connection mechanisms (178) are of the same type. This allows for greater flexibility in assembling building elements together and reduces the variety of building element configurations that need to be manufactured.

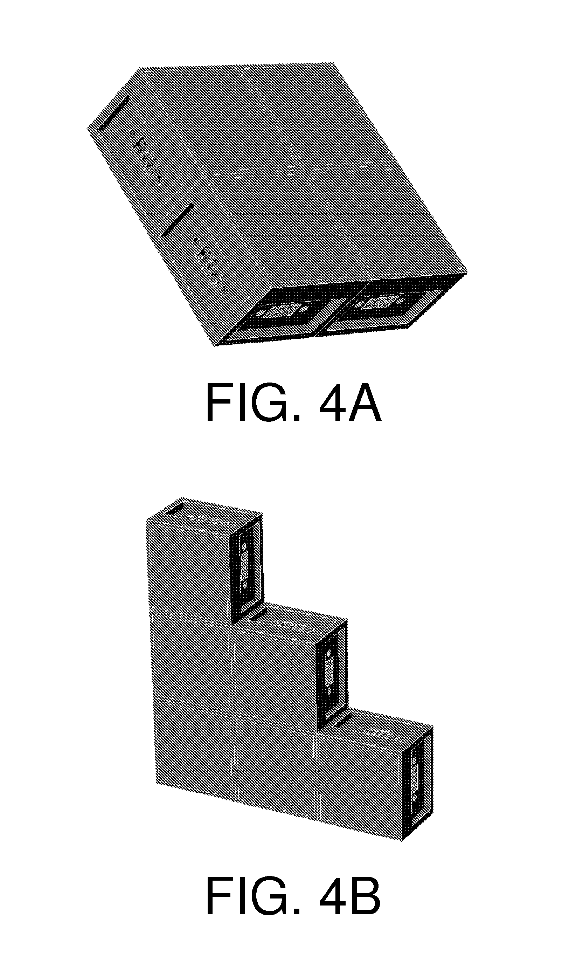

FIG. 4 A and B illustrate how multiple, identical building elements can be coupled together to form assemblies of different sizes and shapes. Between every two building elements there is a detachable attachment means (420) that is not visible from the outside. Connection mechanisms (178) are still visible on the uncoupled, exposed external surfaces of different building elements.

There are examples in the art of discrete electronic devices comprising displays, which can be coupled together for performing different functions. In e.g. *"*A Brief Survey of Distributed Computational Toys", by Eric Schweikardt and Mark D C-ross, in Proceedings of the First IEEE International Workshop on Digital Game and Intelligent Toy Enhanced Learning, page 57-64. IEEE Computer Society, 2007, ISBN:0-7695-2801-5, several distributed computational toys are described that comprise devices that can be coupled together, said devices comprising different types of processing means, means for communicating with coupled devices and, in the case of the "Cube World" toy described in said article, also a display. "Cube World" devices communicate device state data with one another, said device state data influencing what is displayed in coupled devices. However, the consistency and recurrence of the images displayed in "Cube World" devices indicate that said images are pre-determined. Therefore, said images are not algorithmically generated segment by segment, the visual content in different display segments depending on different display segment data, as described in claim 1. This way, a "Cube World" device may simply select amongst the pre-determined images available in device storage depending on the device state, said device state partly depending on device state data communicated from other coupled devices. In claim 1, on the other hand, the data a device communicates with other coupled devices is the display segment data that the visual content generated for display in a specific display segment of a plurality of display segments depends on, not the state of the device as a whole. The disadvantage of depending on pre-determined visual content stored in device storage is obvious: the richness and variety of the visual patterns displayed is severely limited by the available storage space, which in turn is limited by cost, bulk, and power issues. Not surprisingly, "Cube World" devices can only display simple, low resolution, black and white patterns that quickly repeat themselves.

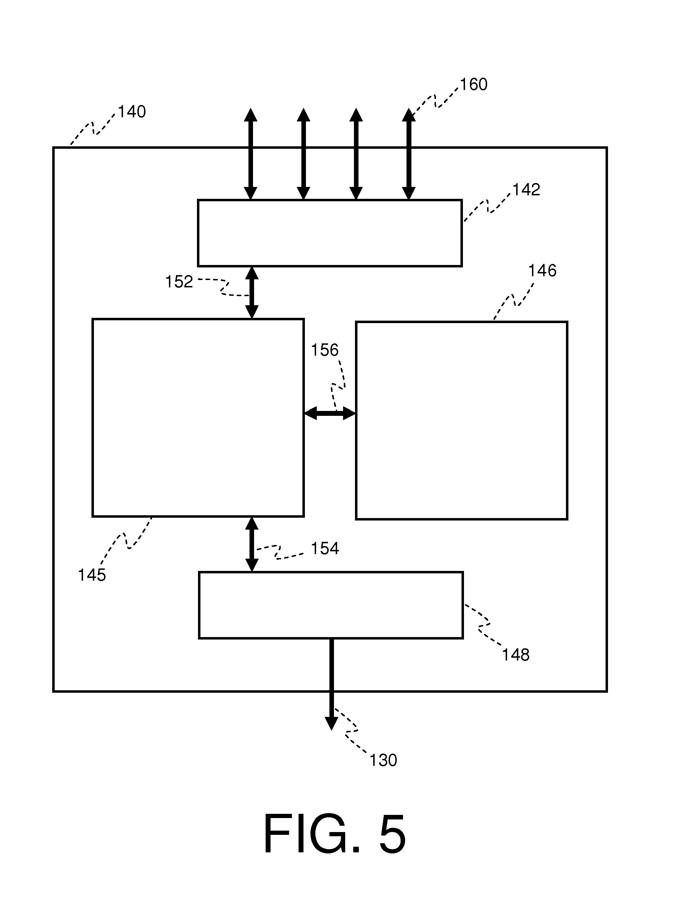

FIG. 5 schematically illustrates the preferred architecture of the embedded processing system 140 of a building element (100). Connection lines 160 are connected to communication management means 142, where communication functions are performed. These communication functions preferably correspond to functions described in the OSI model, known in the art. Communication management means 142 then outputs e.g. suitably decoded and formatted data via connection line 152, connecting the communication management means 142 to the processing means 145. Processing means 145 is also connected to memory means 146 via connection line 156. Processing means 145 performs algorithmic computations based on: (a) data received from communication management means 142; (b) data present in memory means 156; and (c) program code and other control and configuration parameters preferably also present in memory means 156. The algorithmic computations performed in processing means 145 comprise outputting visual content to the display control means 148 via connection line 154. Display control means 148 produces the proper signals for driving the display (120) (not shown in FIG. 5) via connection line 130, so that the visual content received via connection line 154 is displayed in the display (120).

Processing means 145 preferably comprises a programmable digital microprocessor, as known in the art. Alternatively, processing means 145 can comprise multiple processing devices, like e.g. a combination of a programmable digital microprocessor and a field-programmable gate array (FPGA) device. Memory means 146 preferably comprises a non-volatile memory like a Flash memory device. Memory means 146 can also comprise a dynamic random access memory (DRAM) device. Communication management means 142 and processing means 145 can both be, fully or partly, embodied in the same hardware item. Display control means 148 preferably comprises a standard display driver device, as known in the art.

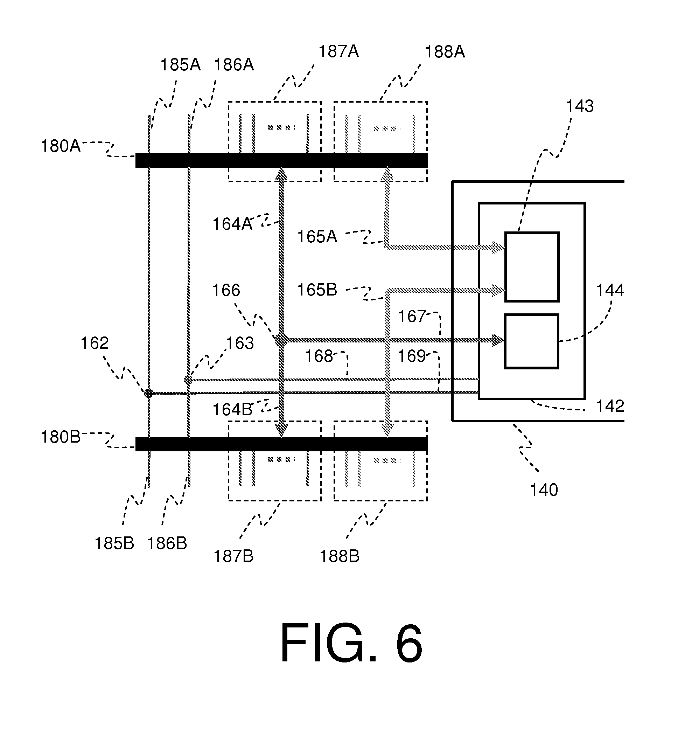

FIG. 6 schematically illustrates details of how the communication ports (180) and associated connection lines (160) of a building element (100) are preferably configured in an embodiment. In the interest of clarity and brevity, in FIG. 6 only two communication ports 180A and 180B are shown. However, the description that follows applies analogously to any number of communication ports in a building element. Specific individual communication lines in each communication port of a building element are associated to a power supply bus that transmits electrical power to all building elements in an assembly. For instance, individual communication lines 185A and 185B can be associated to the negative (-) polarity of the power supply bus, and then joined together and connection point 162 to complete the circuit of the power supply bus. Analogously, individual communication lines 186A and 186B can be associated to the positive (+) polarity of the power supply bus, and then joined together at connection point 163 to complete the circuit of the power supply bus. The advantage of doing this is that a power supply bus across all building elements (100) in an assembly is automatically formed as building elements are coupled together, without the need for cumbersome, visible, external wiring. Connection lines 168 and 169 then respectively carry the (+) and (-) polarities of the power supply bus to the embedded processing system 140, as well as to the rest of the electrical elements of the building element (not shown in FIG. 6). The remaining individual communication lines in each communication port are then preferably divided into two separate sets: (a) the sets of individual communication lines 187A and 187B are allocated to a global bus; and (b) the sets of individual communication lines 188A and 188B are allocated to a local neighbor-to-neighbor communications network. Connection lines 164A and 164B respectively carry the individual signals corresponding to the sets of individual communication lines 187A and 187B respectively in parallel. Since a bus system, as known in the art, is an interface whereby many devices share the same electromagnetic connections, connection lines 164A and 164B are joined together, individual communication line by individual communication line, at connection point 166. This completes the circuit of a global bus that spans all building elements in an assembly. The global bus is then connected through connection line 167 to the bus interface 144 comprised in the communication management means 142. Bus interface 144 provides the embedded processing system 140 with access to the global bus; its functionality is preferably according to any one of the bus protocols known in the art. In addition, connection lines 165A and 165B, comprised in the local neighbor-to-neighbor communications network, respectively carry the individual signals corresponding to the sets of individual communication lines 188A and 188B respectively in parallel. Connection lines 165A and 165B are separately connected to the network interface 143 comprised in the communication management means 142. Network interface 143 handles the data streams in each connection line 165A and 165B independently from one another.

The advantage of dividing the set of individual communication lines into a global bus and a local neighbor-to-neighbor communications network is that it tunes the communication infrastructure to the characteristics of the different signals that need to be communicated, therefore increasing efficiency. For instance, signals that need to be sent to all building elements in an assembly - e.g. configuration parameters or program code - are best communicated via the global bus, since the global bus enables broadcasting of signals to all building elements concurrently. However, local data that needs to be shared only between adjacent building elements is best communicated via the local neighbor-to-neighbor communications network, which is faster and more power-efficient than the global bus, and supports multiple separate communications in parallel.

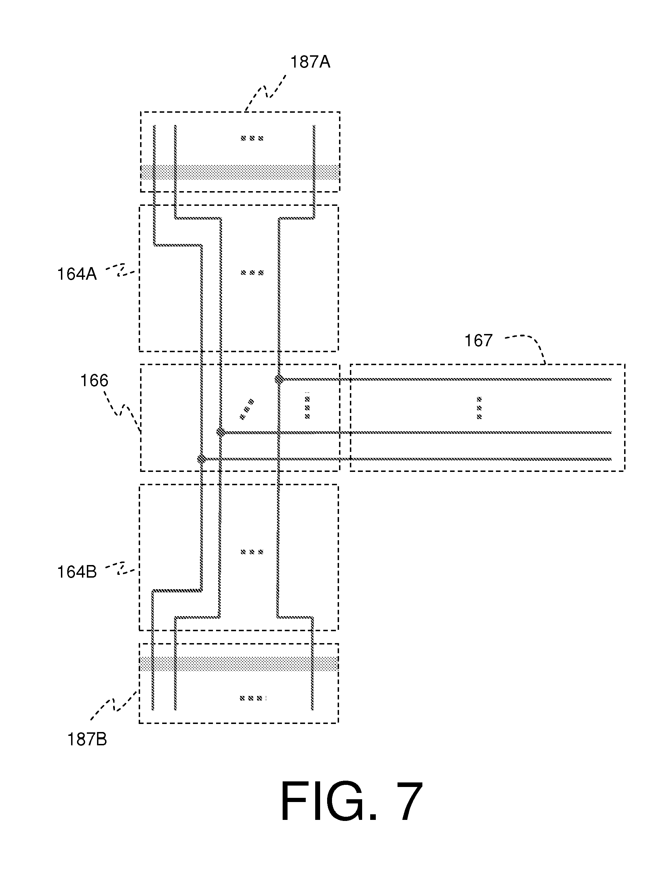

For the avoidance of doubt, FIG. 7 schematically illustrates the details of how (a) connection lines 164A and 164B connect to the sets of individual communication lines 187A and 187B, respectively; and of how (b) connection lines 164A, 164B and 167 are connected together, individual communication line by individual communication line, at connection point 166 to close the circuit of the global bus.

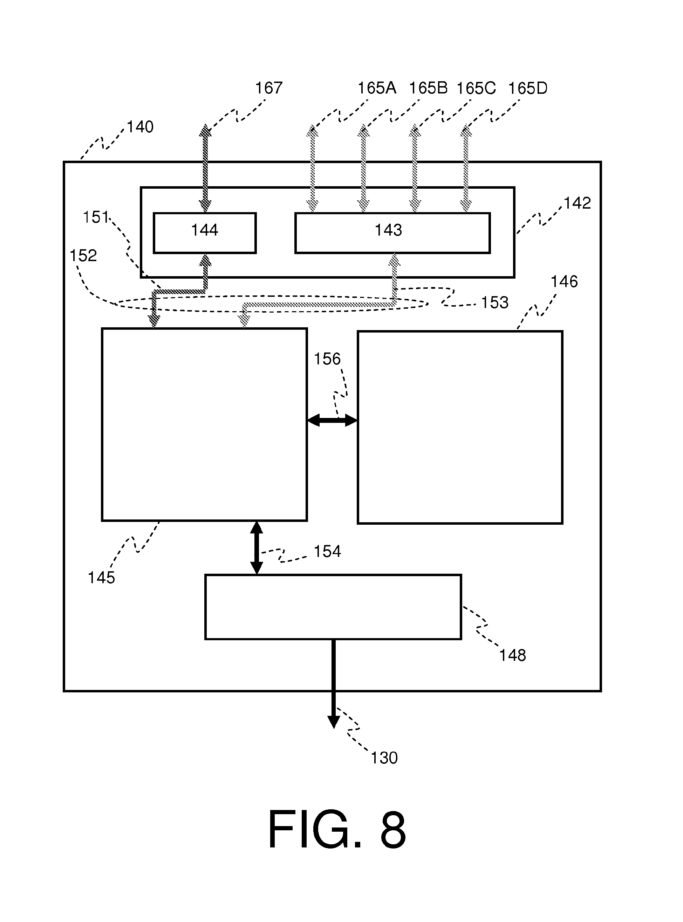

FIG. 8 schematically illustrates more details of the architecture of the embedded processing system 140, according to the embodiment described in FIG. 6 and FIG. 7. The global bus is connected via connection line 167 to bus interface 144 comprised in the communication management means 142. Connection lines 165A-D from four separate communication ports in the building element (100), said connection lines 165A-D comprised in the local neighbor-to-neighbor communications network, connect to the network interface 143 comprised in the communication management means 142. Naturally, any number of communication ports and associated connection lines 165A-D can be comprised in the building element without departing from the scope of claim 14; four are illustrated in FIG. 8 merely by means of example. Processing means 145 is preferably connected to both the bus interface 144 and the network interface 143 via connection lines 151 and 153, respectively. Connection lines 151 and 153 are elements of, and comprised in, connection line 152.

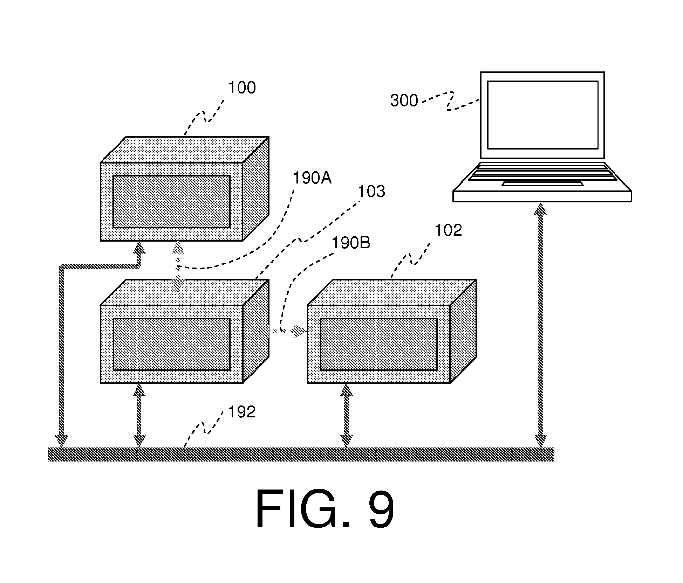

FIG. 9 schematically shows a logical representation of how an assembly of three building elements 100, 102, and 103 can be coupled together and coupled with an external computer system 300. Global bus 192 illustrates the shared physical electromagnetic interface spanning all building elements in the assembly, as described above and illustrated in FIG. 6 and FIG. 7. Information can be preferably broadcasted to all elements 100, 102, 103 and 300 connected to the global bus 192 by any element connected to the global bus. The global bus 192 can also be used for a specific communication only between two specific elements connected to the global bus; in this latter case, however, no other communication can take place in the global bus for as long as said specific communication is utilizing the global bus. A computer system 300 can be connected to the global bus 192, therefore gaining communications access to all building elements in the assembly. This way, the computer system 300 can be used to e.g. initialize, configure, and program the building elements. This can be done by e.g. having the computer system 300 use the global bus 192 to write information into the memory means (146) of the building elements. The local neighbor-to-neighbor communications network comprises communication channels 190A and 190B between adjacent building elements. Building elements can use these communication channels to exchange data with adjacent building elements. Communication channels 190A and 190B can be used in parallel; this way, building elements 100 and 103 can e.g. communicate with one another through communication channel 190A at the same time that e.g. building elements 103 and 102 communicate with one another through communication channel 190B. Naturally, there is a direct correspondence between communication channels and physical sets of individual communication lines (e.g. 188A and 188B in FIG. 6) in the associated communication ports.

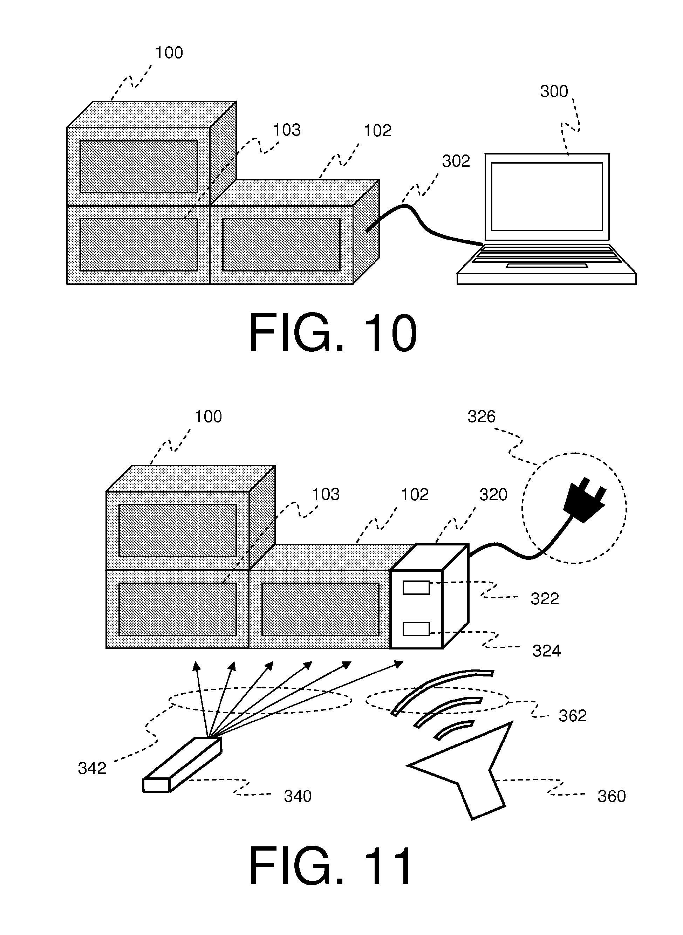

FIG. 10 shows a physical, external representation of the system illustrated in FIG. 9. The detachable attachment means (420) that couples the building elements are not visible, for they are accommodated in between the respective connection mechanisms (178). The computer system 300 is connected to the global bus (192) through a connection means 302 that can be connected e.g. to a connection mechanism in one of the building elements; said connection mechanism can be a special connection mechanism dedicated to connecting to an external computer system, comprising e.g. a universal serial bus (USB) port. In addition, connection means 302 can also be a wireless means of connection, like e.g. an IEEE 802.11 (WiFi) signal. Since the global bus (192) spans the entire assembly, it does not matter which building element the computer system 300 is physically coupled to; the computer system will gain communications access to all building elements in the assembly wherever the physical coupling may take place.

FIG. 11 shows a physical, external representation of another embodiment wherein a special-purpose building element 320 is comprised in an assembly, the assembly further comprising building elements 100, 102, and 103. The special-purpose building element comprises one or more sensors so to render the assembly responsive to external stimuli from the environment. For instance, special-purpose building element 320 can comprise a microphone 322 to capture environment sound waves 362 produced e.g. by a speaker 360, or by a person speaking, or by any other sound sources within reach of the microphone 322. Special-purpose building element 320 can also contain e.g. an infrared sensor 324 to capture infrared signals 342 produced by a remote control 340. Alternatively, remote control 340 could emit any other type of wireless signal like e.g. radio waves, sensor 324 then being a radio receiver. Either way, a user can use remote control 340 to control certain behaviors and characteristics of the building elements; for instance, a user can use remote control 340 to switch between different image generation algorithms; for adjusting the speed with which the images change; for choosing different color palettes to display the images; etc. Preferably, special-purpose building element 320 is connected to the global bus (192), so it can access, exchange data and program code with, and control other building elements in the assembly. In an embodiment, special-purpose building element 320 further comprises a power cord 326 that can be connected to the power mains. This way, according to the embodiment illustrated in FIG. 6, special-purpose building element 320 can provide power to all building elements in the assembly by connecting its two connection lines of the power supply bus (168, 169) to the mains terminals either directly, or through e.g. a power supplyhttp://en.wikipedia.org/wiki/Voltage converter. In another embodiment, special-purpose building element 320 is not mechanically coupled to the rest of the assembly, but is connected to the global bus (192) via a longer-distance cable or a wireless means of connection like e.g. an IEEE 802.11 (WiFi) signal.

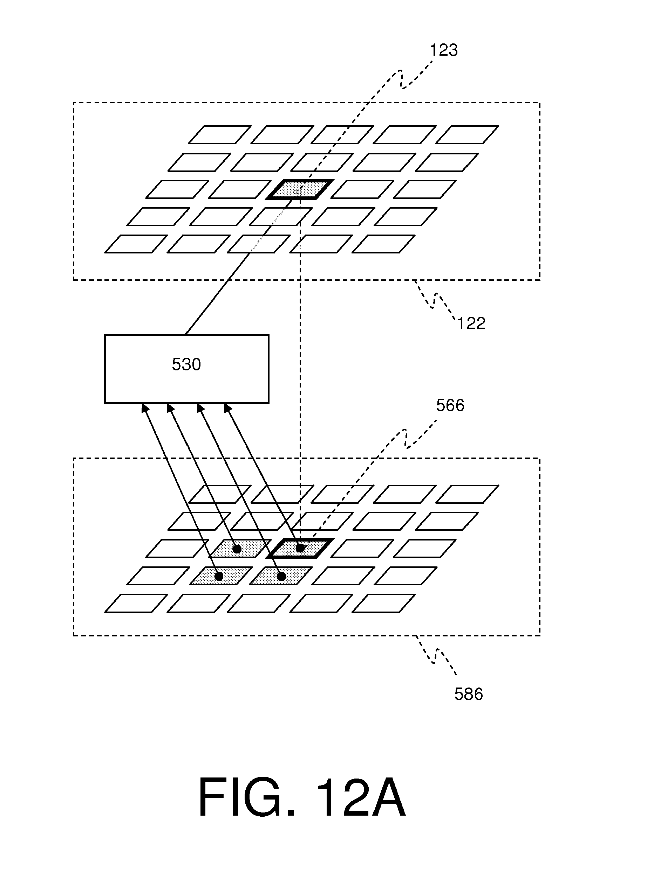

According to the present invention, the display of a building element is divided into a plurality of display segments for algorithmic purposes, thereby forming a 2-dimensional array of display segments. Each display segment comprises at least one but potentially a plurality of the physical pixels of the corresponding display. FIG. 12A illustrates a 2-dimensional array of display segments 122, comprising a central display segment 123. The visual content displayed in each display segment is generated by an image generation algorithm. The image generation algorithm preferably generates visual content on an image frame by image frame basis, whereby in each iteration of the image generation algorithm a new image frame is generated and displayed in the 2-dimensional array of display segments of the building element. The parts of the image frame displayed in each display segment are referred to as frame segments. The data the image generation algorithm operates on to generate the frame segments are preferably arranged in a 2-dimensional array of display segment data 586, said 2-dimensional array comprising as many display segment data as there are display segments. This way, there is a one-to-one correspondence between each display segment and a display segment data, each display segment corresponding to a different display segment data. In FIG. 12A display segment 123 corresponds to display segment data 566. For ease of reference, the topology of the 2-dimensional array of display segments is preserved in the array of display segment data, i.e. e.g.: (a) if a first display segment corresponding to a first display segment data is physically near a second display segment corresponding to a second display segment data, then the second display segment data is said to be near the first display segment data; (a) if a first display segment corresponding to a first display segment data is physically e.g. to the right of a second display segment corresponding to a second display segment data, then the second display segment data is said to be to the right of the first display segment data; (c) display segment data associated to physically adjacent display segments are said to be adjacent display segment data; an so on.

Each frame segment of each image frame is generated depending on display segment data comprised in the 2-dimensional array of display segment data. If a frame segment to be displayed in a display segment is generated directly depending on a certain display segment data, then said certain display segment data is said to be associated to said display segment; conversely, said display segment is also said to be associated to said certain display segment data. It should be noted that an association between display segment data and a display segment entails a direct algorithmic dependency between said display segment data and the image frame generated for display in said display segment; the association is thus independent of the physical location of said display segment data. The display segment data is preferably stored in memory means 146 of the corresponding building element. At least the display segment data corresponding to a display segment is associated to said display segment. In FIG. 12A, for instance, display segment 123 is associated at least to its corresponding display segment data 566. Therefore, there is at least one display segment data associated to each display segment, so a frame segment can be generated depending directly on said associated display segment data. However, a display segment can also be associated to a plurality of display segment data. In FIG. 12A, the frame segment to be displayed in display segment 123 is generated by taking the output of a mathematical function 530 applied to four different highlighted display segment data comprised in the 2-dimensional array of display segment data 586. Said four different display segment data are then said to be comprised in the "footprint" of display segment 123. More generally, a display segment data is comprised in the footprint of a display segment if the frame segment to be displayed in said display segment is generated depending directly on said display segment data. Therefore, all display segment data comprised in the footprint of a display segment are associated to said display segment. Since at least the display segment data corresponding to a display segment is associated to said display segment, the footprint of a display segment comprises at least its corresponding display segment data. A footprint comprising only the corresponding display segment data is said to be a minimal footprint.

Since each image frame is generated depending on display segment data comprised in a 2-dimensional array of display segment data, it is preferred that said display segment data change at least partly from one iteration of the image generation algorithm to the next, so different image frames can be generated in succession and therewith forming dynamic visual patterns. To achieve this, the image generation algorithm is preferably arranged so each display segment data is a state held by an algorithmic element called a cell. The 2-dimensional array of display segment data is then referred to as an array of cells, each cell in the array of cells holding a state. The topology of the 2-dimensional array of display segments is still preserved in the array of cells. Cell states preferably change after each iteration of the image generation algorithm, so a new image frame is produced depending on new cell states. The display segment data referred to in the appended claims preferably comprises a cell state. Therefore, cell states are a preferred example of display segment data associated to a display segment.

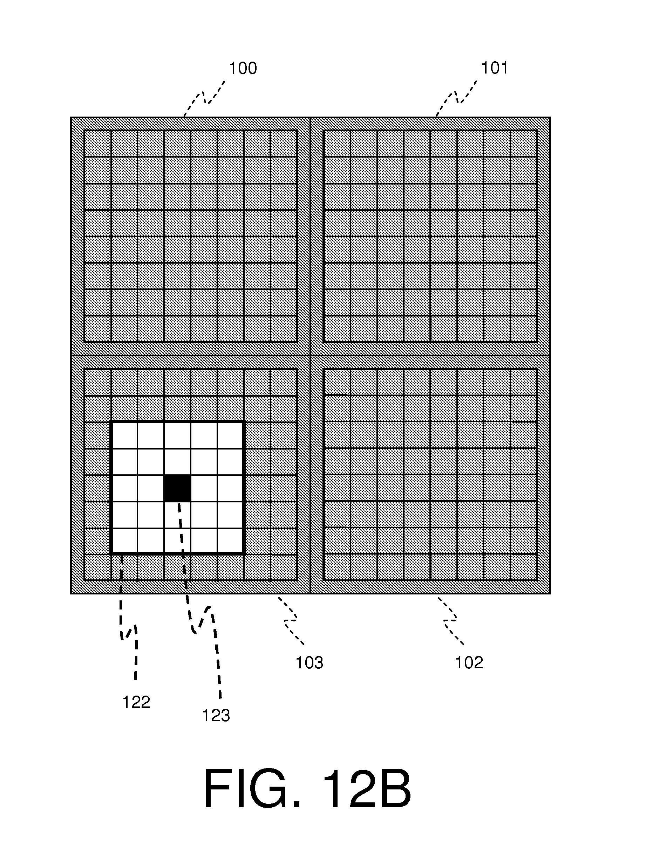

FIG.12B illustrates an assembly of four building elements 100, 101, 102, and 103. Display segment 123 of building element 103 is highlighted. Since there is a one-to-one correspondence between cells and display segments, for the sake of brevity in all that follows the same reference sign and the same element of a drawing may be used to refer to a display segment or to its corresponding cell, interchangeably. This way, reference may be made to e.g. "display segment" 123 or to "cell" 123 in FIG. 12B. The context of the reference determines whether the physical element (display segment) or the associated algorithmic element (cell) is meant.

The image generation algorithm comprises determining how the states of the cells change from one iteration of the image generation algorithm to the next. In order to favor spatial locality of reference in the computations and communications comprised in the image generation algorithm (with advantages in speed and power consumption), it is preferred that the next state of a given cell be dependent mostly upon the current or past states of nearby cells. Such nearby cells are said to be comprised in the cell neighborhood of the given cell. The cell neighborhood of a cell may comprise the cell itself. In FIG. 12B, a cell neighborhood 122 of cell 123 is illustrated, said cell neighborhood 122 comprising: (a) cell 123 itself; (b) all cells adjacent to cell 123; and (c) all cells adjacent to cells that are adjacent to cell 123; in other words, in FIG. 12B the cell neighborhood 122 of cell 123 comprises all cells within a Chebyshey distance of two cells from cell 123. This way, the next state of cell 123, as computed by the image generation algorithm, will depend mostly on the current or past states of the cells comprised in cell neighborhood 122.

For the avoidance of doubt, it should also be noted that in an iteration of the image generation algorithm a new state of a cell may be calculated depending on the states of the cells in its cell neighborhood, and then a new frame segment may be generated depending directly on said new state. Therefore, said frame segment depends indirectly on the states of other cells comprised in said cell neighborhood. However, since such dependence is indirect (i.e. it operates via the new state), it does not entail that all cells in the cell neighborhood are associated to the display segment displaying said new frame segment.

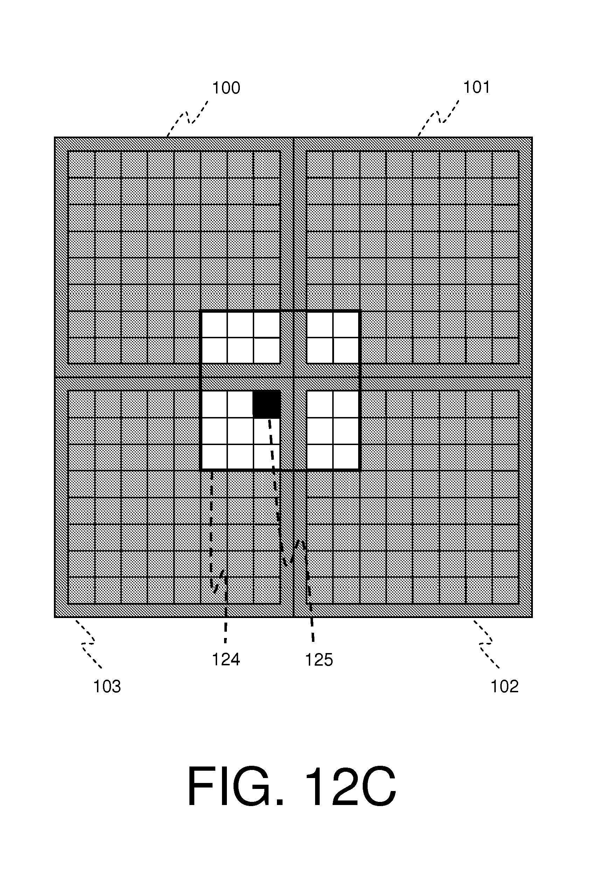

The key advantage of favoring spatial locality of reference in the image generation algorithm becomes apparent in FIG. 12C. The next state of cell 125 will be dependent upon the current or past states of the cells comprised in cell neighborhood 124. However, unlike the case illustrated in FIG. 12B, the cell neighborhood now comprises cells from different building elements. This way, cell neighborhood 124 comprises: (a) six cells from building element 100; (b) four cells from building element 101; (c) six cells from building element 102; and (d) nine cells from building element 103. In order to compute the next state of cell 125, the image generation algorithm needs to read out the states of all cells in cell neighborhood 124. Therefore, building elements 100, 101 and 102 communicate the current or past states of their respective cells comprised in cell neighborhood 124 to building element 103 by means of using their respective communication ports (180), preferably through the respective communication channels (190A, 190B) of the local neighbor-to-neighbor communications network. Preferably, after said communication, the current or past states of all cells in cell neighborhood 124 become available in the memory means (146) of the embedded processing system (140) of building element 103. From the memory means (146), the current or past states of all cells in cell neighborhood 124 are read out by the processing means (145) of building element 103, where the image generation algorithm is preferably computed.

It should be noted that, with reference to FIG. 12C, there is no direct coupling between building elements 103 and 101, since none of their external surfaces are coupled to each other via detachable attachment means (420). It can be said that there are two "hops" between building elements 103 and 101, while there is just one "hop" between e.g. building elements 103 and 100. Therefore, the current or past states of the four cells from building element 101 comprised in cell neighborhood 124 need to be communicated to building element 103 via building element 100 or building element 102. This way, if e.g. building element 100 is used to pass on the data from building element 101 to building element 103, then building element 100 needs to communicate to building element 103 the current or past states of its own six cells comprised in cell neighborhood 124 as well as the current or past states of the four cells from building element 101 also comprised in cell neighborhood 124. The more data is communicated across building elements, and the more "hops" there are between the communicating building elements, the higher the penalty involved in terms of computing time and power consumption. Here a trade-off becomes apparent: on the one hand, by increasing the size of a cell neighborhood (124) more complex image generation algorithms can be implemented by means of which richer and more complex visual patterns can be produced; on the other hand, by limiting the size of a cell neighborhood (124) one can minimize the amount of data, as well as the number of "hops", involved in the corresponding communications.

Naturally, when it is said that a cell neighborhood comprises nearby cells, the degree of spatial locality of reference thereby achieved depends on what is understood by the word "nearby". In this description and the appended claims, "nearby" cells with respect to a reference cell are considered to be located within a Chebyshev distance of n cells from said reference cell, wherein n is approximately half the number of cells along the longest dimension of the array of cells. For instance, in FIG. 12B building element 103 comprises an 8x8 array of cells; therefore, cells within a Chebyshev distance of 4 cells from a reference cell are considered to be nearby cells with respect to said reference cell. Equivalently, and for the avoidance of doubt, all display segments within a Chebyshev distance of n display segments from a reference display segment, wherein n is approximately half the number of display segments along the longest dimension of the display, are considered to be "physically near" said reference display segment in the context of claim 5.

Naturally, the footprint of a display segment can also be defined in terms of cells: a cell is comprised in the footprint of a display segment if the frame segment to be displayed in said display segment is generated depending on a current or past state of said cell. If a frame segment to be displayed in a display segment is generated directly depending on a current of past state of a cell, then said cell is said to be associated to said display segment; conversely, said display segment is also said to be associated to said cell. Equivalently, and for the avoidance of doubt, all cells comprised in the footprint of a display segment are associated to said display segment. It should be noted that a footprint is analogous to a cell neighborhood in that a footprint may comprise cells from different building elements, the states of which then need to be communicated between building elements for generating a frame segment. Preferably, the image generation algorithm is arranged so that the footprint of a display segment comprises, next to the cell corresponding to said display segment, at most a subset of the cells adjacent to said cell corresponding to the display segment. This way, in practice the footprint of a display segment will often be comprised in the cell neighborhood of the cell corresponding to said display segment, and no additional cell state data will need to be communicated between building elements other than what is entailed by said cell neighborhood. This is the case for cell neighborhood 124 illustrated in FIG. 12C.

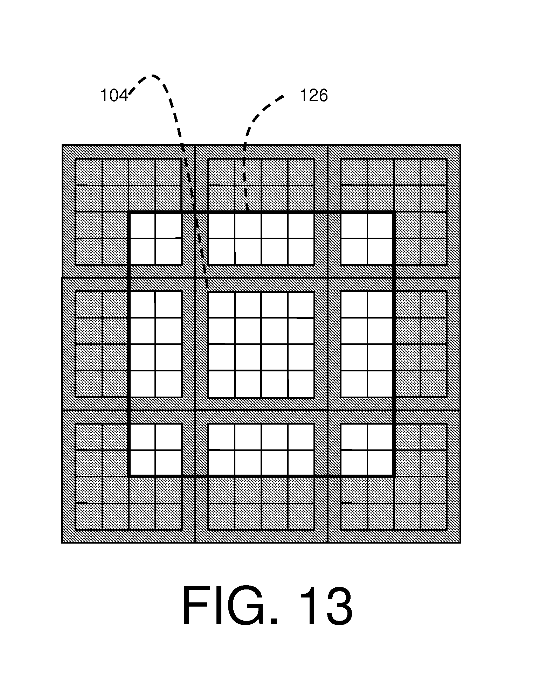

FIG. 13 illustrates a rectangular assembly comprising nine building elements, wherein building element 104 occupies the central position. Here it is assumed that the cell neighborhood (124) of any given cell of building element 104 comprises all cells within a Chebyshev distance of two cells from said given cell. It is also assumed that the footprint is comprised in said cell neighborhood. This way, the plurality of cells 126 illustrates all cells in the assembly which current or past states are needed to compute the next states of all cells in building element 104, as well as to compute all frame segments to be displayed in the display of building element 104 depending on said next states of all cells in building element 104.

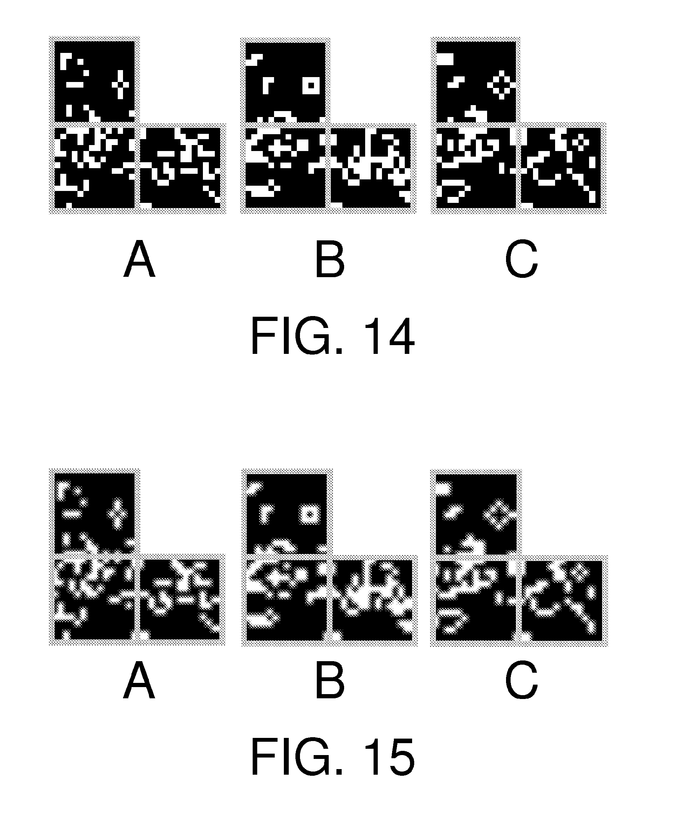

FIG. 14 A to C illustrates an assembly of three building elements, wherein the display of each building element is divided into a 14x14 array of display segments. The frame segment displayed in each display segment is generated depending only on the corresponding cell, i.e. the footprint of all display segments is a minimal footprint. With a minimal footprint, the cell corresponding to each display segment is also the sole cell associated to said display segment. Each display segment displays white in all of its physical pixels if its associated cell state is one, or black if its associated cell state is zero. The algorithm used to determine how the states of the cells evolve from one iteration of the image generation algorithm to the next is Conway's Game of Life cellular automaton. Cellular Automata are known in the art, for instance, from "Cellular Automata", by Andrew Ilachinski, World Scientific Publishing Co Pte Ltd, July 2001, ISBN-13: 978-9812381835. A cellular automaton algorithm comprises a set of rules for determining the next state of a cell (125) based on current or past states of cells in a cell neighborhood (124), whereby the same set of rules applies for determining the next states of all cells in an array of cells. The set of all cell states comprised in the array of cells at any given iteration of the algorithm is called a "generation". In each iteration of the algorithm the states of all cells are updated so the entire array of cells "evolves" onto the next generation. Each iteration of the image generation algorithm preferably comprises one iteration of the cellular automaton algorithm, wherewith a new image frame is generated.

In Conway's Game of Life algorithm each cell can assume one of two possible states: one (alive) or zero (dead). Each iteration of the algorithm applies the following rules to each cell: (a) any live cell with two or three live adjacent cells continues to live in the next generation; (b) any dead cell with exactly three live adjacent cells becomes alive in the next generation; and (c) in all other cases the cell dies, or stays dead, in the next generation. Therefore, the cell neighborhood entailed by the Game of Life algorithm comprises all adjacent cells of a given cell, as well as the given cell itself. This is referred to in the art as a "Moore neighborhood". Only the current states of the cells in the cell neighborhood (and not any past states) are considered for determining the next state of said given cell. FIG. 14A illustrates three image frames generated depending on a first generation of the Game of Life being computed in each of the three building elements; FIG. 14B illustrates three image frames generated depending on a second generation of the Game of Life being computed in each of the three building elements; and FIG. 14C illustrates three image frames generated depending on a third generation of the Game of Life being computed in each of the three building elements; said first, second, and third generations of the Game of Life being successive. All three drawings were produced from an actual functional simulation of an assembly of three building elements. It should be noted that the evolution of the cell states at the edges of the displays is computed seamlessly, as if all three building elements together formed a single, continuous array of cells. This is achieved by having each building element communicate the states of the cells at the edges of their respective displays to adjacent building elements. This way, an arbitrarily-large and arbitrarily-shaped cellular automaton can be constructed by connecting the appropriate number and type of building elements together, according to this invention.

The use of discrete electronic devices that can be connected together for forming a cellular automaton has been described in the art. See e.g. the prototype cellular automaton construction kits described in "Computation and Construction Kits: Toward the Next Generation of Tangible Building Media for Children", by Michael Eisenberg, Leah Buechley, and Nwanua Elumeze, in Proc. of Cognition and Exploratory Learning in the Digital Age (2004), pages 423-426. However, said discrete electronic devices do not comprise a display device, as described in claim 1, but merely one or a handful of light-emitting means. This is not advantageous, because any substantial visual pattern comprises a substantial amount of image pixels, i.e. at least in the order of magnitude of 100 image pixels. Therefore, to be able to display a substantial visual pattern, even the lowest-end display devices comprise a substantial amount of physical pixels, i.e. at least in the order of magnitude of 100 physical pixels. However, since said discrete electronic devices only comprise one or a handful of light-emitting means, it would be necessary to produce such devices in very small sizes and to couple them together in very high numbers and in very close proximity so to form a visual pattern of enough detail and of enough size for the purposes of the present invention; this would be highly inefficient, uneconomical, and impractical in terms of cost, physical bulk, speed, power dissipation, ease of installation, etc.

For the avoidance of doubt, throughout this description, the appended abstract, and the appended claims, the word "display" refers to a display device comprising a substantial amount of physical pixels.

FIG. 15 A to C show the same assembly of three building elements displaying the same three successive generations of the Game of Life illustrated in FIG. 14 A to C, except that image post-processing algorithms are now comprised in the image generation algorithm. In the simulation shown in FIG. 14A to C the transformation from cell states to visual content, i.e. to the color/intensity values to be displayed in the physical pixels of the display, is trivial: all physical pixels of a display segment become white if its associated cell state is one, or black if its associated cell state is zero. Since there are only two cell states possible, the visual content comprises only two colors; since there are only 14x14 = 196 cells per display, the visual content becomes chunky in appearance (an effect similar to pixilation in computer graphics). Because of both these problems, the resulting images may not be aesthetically attractive enough in certain applications. To circumvent these problems, in the functional simulation shown in FIG. 15 A to C two image post-processing algorithms are applied: (a) a bilinear interpolation algorithm; and (b) a color-map transformation. The bilinear interpolation algorithm is well-known in the art. It entails a footprint for each display segment, said footprint comprising the cell corresponding to said display segment and three cells adjacent to said cell corresponding to the display segment. This footprint is comprised in the cell neighborhood entailed by the Game of Life algorithm, so no extra information needs to be communicated between building elements other than what is already communicated for the purpose of computing the cellular automaton algorithm. It is assumed in the simulation that each display segment comprises 400 physical pixels. The bilinear interpolation algorithm then generates, depending on its footprint, a frame segment comprising 400 image pixels for each display segment, the value of each image pixel being a real number between zero and one. Therewith, the bilinear interpolation algorithm generates an image frame with much smoother visual patterns than those displayed in FIG. 14A-C. Although not necessary, preferably an interpolation algorithm used in image post-processing generates an image frame with as many image pixels as there are physical pixels available in the display, and with the same aspect ratio. This way, each image pixel of the image frame generated will correspond to a physical pixel in the display. There are many other interpolation algorithms known in the art that can be advantageously used in image post-processing, bilinear interpolation being merely an example. The image frame generated by the bilinear interpolation algorithm is not displayed, but further processed with the color-map transformation, which is also well-known in the art. The color-map transformation comprises using e.g. a look-up table to convert each image pixel value (real number between zero and one) into a specific color/intensity value to be displayed in a physical pixel. This way, the color-map transformation generates a new image frame by adding colors to the image frame generated by the bilinear interpolation algorithm. Said new image frame is then displayed, as illustrated in FIG. 15A-C.

It should be noted in FIG. 15A-C that integrated visual patterns result from the separate interpolation of the image frames displayed in each of the three building elements in the assembly; i.e. each interpolated image frame is visually coherent with its adjacent interpolated image frame(s). This is achieved because cell states comprised in the footprint entailed by the bilinear interpolation algorithm are communicated between building elements. It should also be noted that, while the cellular automaton algorithm determines how cell states evolve from one iteration of the image generation algorithm to the next, the post-processing algorithms transform said cell states into actual visual content.

An image post-processing algorithm provides at least one non-trivial transformation step in between algorithmic entities (e.g. display segment data, cell states, image pixels, etc.) and the visual content (i.e. the color/intensity values to be displayed in the physical pixels of the display). This way, e.g. the interpolation algorithm used in the simulations shown in FIG. 15A-C transforms groups of four different binary cell states (comprised in its footprint) into approximately 400 continuous image pixel values. The color-map transformation used in the same example translates a real image pixel value into e.g. an RGB value or whatever other color model can be physically displayed in the display. Many algorithms known in the art can be used to advantage within the scope of performing image post-processing in the present invention, as claimed in claim 12. Many of said algorithms relate to the fields of image processing - being described e.g. in "The Image Processing Handbook", by John C. Russ, CRC, 5th edition (December 19, 2006), ISBN.-13: 978-0849372544 - image manipulation, and computer graphics - being described e.g. in "Computer Graphics: Principles and Practice in C", by James D. Foley, Addison-Wesley Professional: 2nd edition (August 14, 1995), ISBN-13: 978-0201848403.

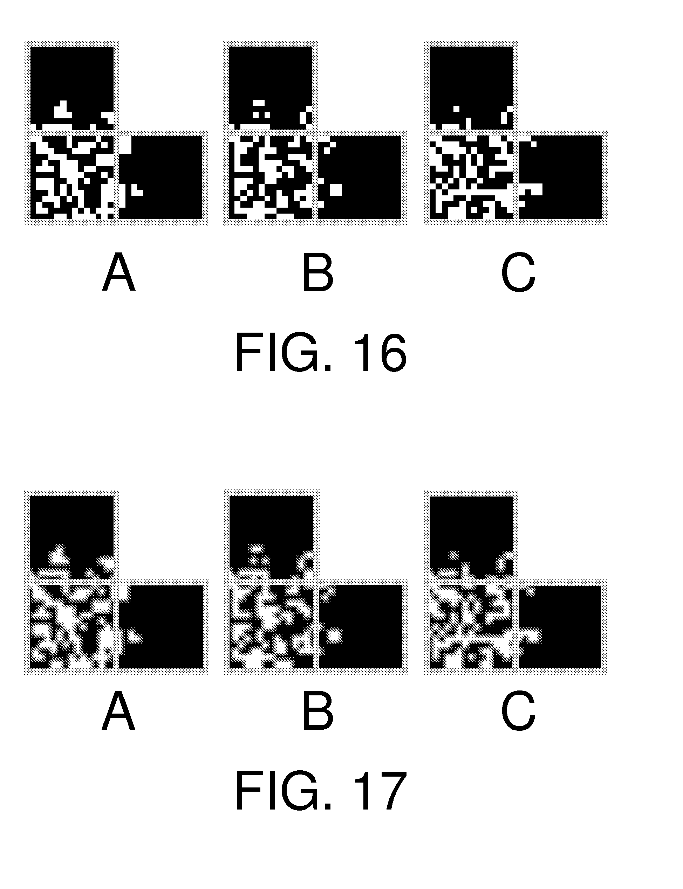

FIG. 16 A to C show simulation results analogous to those of FIG. 14 A to C, except that the lower-left building element now computes the "Coagulation Rule" cellular automaton, known in the art. The other two building elements in the assembly still compute Conway's Game of Life. As in FIG. 14 A to C, three successive generations are shown. The building elements communicate cell state information associated to the cells at the edges of their respective displays. The advantage of such an embodiment, wherein different building elements compute different image generation algorithms, is that an extra degree of freedom becomes available for programming attractive visual patterns. In the example of FIG. 16, the Coagulation Rule is used in one building element to counter-balance the fact that, in Conway's Game of Life, the number of live cells often decreases over time, reducing the dynamism of the resulting images. The Coagulation Rule, on the other hand, although less interesting than Conway's Game of Life for being more chaotic, tends to maintain a high number of live cells over time, which then seed the adjacent building elements and maintain an interesting visual dynamics.

Both Conway's Game of Life and the Coagulation Rule are so-called "outer totalistic" automata, as known in the art; they have identical cell neighborhoods, and comprise cells that can assume only two different states (dead or alive). In the example of FIG. 16, the arrays of cells in each of the three building elements were also identically-sized. All this means that the transition from one algorithm to another across building element boundaries, and the associated management of cell state data, is algorithmically trivial. However, using different image generation algorithms in different building elements is also possible when the respective image generation algorithms work on differently-sized arrays of cells, different numbers of possible cell states, different cell neighborhoods, etc. In such cases, however, the respective image generation algorithms need to comprise means for converting data from the mathematical framework of one image generation algorithm into the mathematical framework of another (e.g. averaging of cell states, transformations based on look-up tables, etc.).

FIG. 17 A to C show the same assembly of three building elements displaying the same three successive generations illustrated in FIG. 16 A to C, except that image post-processing algorithms are now used. Just as in FIG. 15, bilinear interpolation is applied for improved visual pattern smoothness, and a color-map transformation is performed thereafter. The color-map used, however, has fewer colors than those used in FIG. 15. It should again be noted that integrated visual patterns are formed by interpolating three separate image frames (each corresponding to a different building element), said integrated visual patterns seamlessly spanning multiple displays as if a single, larger image had been interpolated.

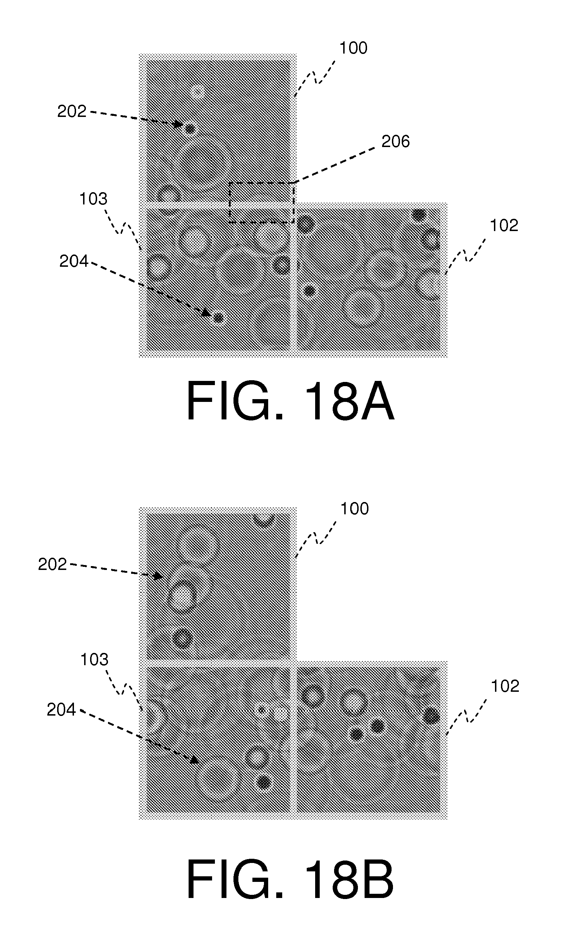

FIG. 18 A and B illustrate two generations of a simulation comprising three building elements, all computing a cellular automaton algorithm that simulates the propagation of waves on a liquid. As known from e.g. "Cellular Automata Modeling of Physical Systems", by Bastien Chopard and Michel Droz, Cambridge University Press (June 30, 2005), ISBN-13: 978-052167:3457, many physical systems can be simulated by means of cellular automaton algorithms. The cellular automaton algorithm used in FIG. 18 was derived from the studies published in "Continuous-Valued Cellular Automata in Two Dimensions", by Rudy Rucker, appearing in New Constructions in Cellular Automata, edited by David Griffeath and Cristopher Moore, Oxford University Press, USA (March 27, 2003), ISBN-13: 978-01951317187. This time, each display segment comprises a single physical pixel, so no interpolation is required. Each display segment is associated to a single cell state (minimal footprint). Each display is assumed to have 198x198 physical pixels in the simulation, so an array of cells comprising 198x198 cells is used in the cellular automaton computation of each building element. The cellular automaton algorithm used is a so-called "continuous automaton", as known in the art. This way, the state of each cell is continuous-valued and represents the height level of the "liquid" at the particular location of said cell. Once again, cell state information associated to the edges of the displays of each building element is communicated to adjacent building elements so the cellular automaton can be computed as if for a single array of cells spanning all displays in the assembly. An extra algorithm is added to the simulation to introduce random "disturbances" to the "liquid surface" - forcing changes to the states of small groups of adjacent cells at random positions - which give rise to the "waves". Said extra algorithm is purely local to a given building element, requiring no information from other building elements. Each image frame displayed in a building element is generated depending on a different generation of the cellular automaton computed in said building element.

The cellular automaton generation shown in FIG. 18B occurs 33 generations after the generation shown in FIG. 18A. It should be noted that visual patterns 202 and 204 in FIG. 18A, corresponding to disturbances to the "liquid surface" at two different random positions, "propagate" further when shown again in FIG. 18B. It should also be noted that the "waves propagate" seamlessly across building element boundaries, as shown in the display region 206 in FIG. 18A. This is achieved because the continuous automaton algorithm, based on cell state data exchanged between the building elements, generates visual patterns in a building element that are visually coherent with the visual patterns generated in adjacent building elements, thereby forming an integrated visual pattern spanning all building elements. This way, different building elements display different parts of the integrated visual pattern, like the "wave front" in display region 206, part of which is displayed in building element 100, another part of which is displayed in building element 103. Naturally, as also shown in display region 206, because the displays of two adjacent building elements do not mechanically touch due to the space taken by the casings of the building elements, the appearance of continuity is not perfect as the "wave front" crosses the building element boundary. This effect can be advantageously reduced by making the building element casing as thin as practical, or by adding an algorithmic compensation for this effect to the image generation algorithm.

Although no interpolation is used in the simulations shown in FIG. 18, a color-map transformation based on a color map comprising several tones of blue and green is used. The footprint of the color-map algorithm is also a minimal footprint.

The previous embodiments illustrate the advantageous use of cellular automata algorithms for generating visual content, in the context of achieving spatial locality of reference. However, cellular automata are only one example class of algorithms that can be used for achieving such spatial locality of reference. Many algorithms that do not require substantial cell state information associated to far away cells for determining the next state of a given cell can achieve the same, therefore not departing from the scope of claim 5. Examples of such algorithms comprise certain neural network configurations for generating visual content, as discussed in the next paragraphs

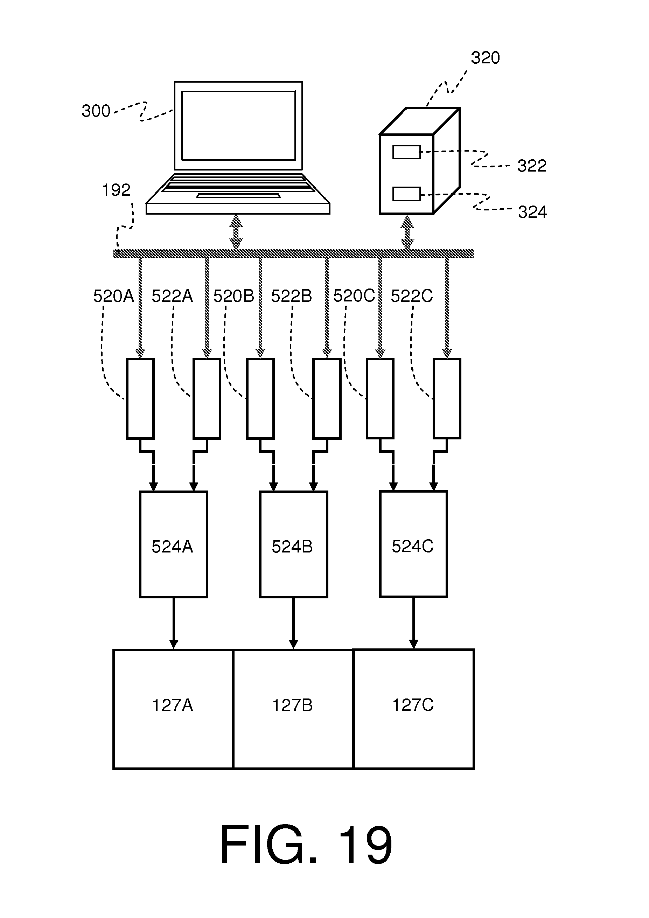

FIG. 19 schematically illustrates a method for generating visual content that does not use cellular automaton algorithms. For the sake of clarity and brevity, only three cells 127A to 127C are shown comprised in a 1-dimensional array of cells; any number of cells comprised in any 1-, 2-, or even higher-dimensional array of cells arrangement is possible in ways analogous to what is described below. Distance calculation means 524A to 524C are associated to each cell, said association entailing that the state of a cell depends directly on the output of its associated distance calculation means. Each distance calculation means 524A-C receives as inputs an input vector 522A-C and a reference vector 520A-C. At least one of a computer system 300 or a special-purpose building element 320, comprising e.g. sensors 322 and 324, is connected to a global bus 192. Through global bus 192, the computer system 300 or the special-purpose building element 320 can load the coordinates of all input vectors 522A-C as well as of all reference vectors 520A-C. The method according to this embodiment then comprises: (a) a first step of loading the coordinates of all reference vectors 520A-C; (b) a second step of loading new coordinates for all input vectors 522A-C; (c) a third step of calculating a distance between each reference vector 520A-C and the corresponding input vector 522A-C by means of the respective distance calculation means 524A-C; (d) a fourth step of assigning the distance calculated by each distance calculation means 524A-C to the state of the cell 127A-C associated to it; and (e) a fifth step of returning to the second step until a stop condition is satisfied. This way, the method so described comprises multiple iterations. In each iteration, the image generation algorithm preferably generates an image frame depending on the cell states in that iteration. The reference vectors 520A-C and the input vectors 522A-C can have any number of dimensions. However, each reference vector 520A-C preferably has the same number of dimensions as the corresponding input vector 522A-C, so a distance between them can be easily calculated. The distance calculated by the distance calculation means 524A-C can be any mathematically-defined distance between two vectors, like e.g. an Euclidean distance, a Manhattan distance, a Hamming distance, etc. The distance can also be advantageously normalized across cells.

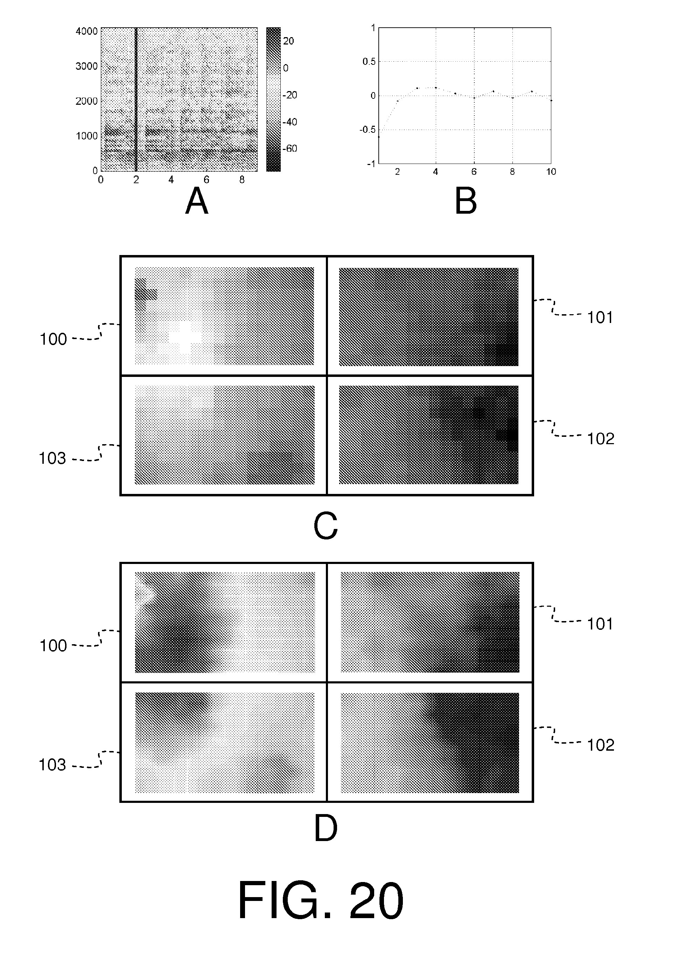

FIG. 20 illustrates, by means of an actual functional simulation, how the method shown in FIG. 19 can be used for generating intriguing visual content that is responsive to stimuli from the environment. It is assumed that either a computer system (300) or a special-purpose building element (320), equipped with a microphone, captures an external environment sound and initially processes it. For the sake of simulation, Handel's "Hallelujah" chorus is used as said environment sound. FIG. 20A shows a spectrogram of a segment of Handel's "Hallelujah". In the spectrogram, the horizontal axis represents time, the vertical axis represents frequency, and the colors represent sound intensity. In other words, a spectrogram is a series of frequency spectra in time. The spectrogram in FIG. 20A comprises a vertical bar that illustrates a specific part of the sound (i.e. a specific frequency spectrum). As the sound is played, the computer system (300) or the special-purpose building element (320) perform principal component analysis (PCA) on the frequency spectrum of each part of the sound; in the context of this embodiment, PCA is used as a means to reduce the dimensionality of the data, so to optimize speed and minimize the communication bandwidth required. The resulting normalized ten lowest-order principal components, corresponding to the specific part of Handel's "Hallelujah" illustrated by the vertical bar in FIG. 20A, are shown in FIG. 20B. The ten lowest-order principal components are then loaded as the coordinates of the 10-dimensional input vector (522A-C) of every cell in every building element of a 2x2 assembly of four building elements 100 to 103, according to the method shown in FIG. 19. This way, the input vectors of all cells of all building elements in the assembly will have the same coordinates.

The reference vectors (520A-C) of each cell in the assembly are loaded each with a potentially different set of coordinates, also in accordance with the method illustrated in FIG. 19. To determine the coordinates of the reference vectors, the computer system (300) or the special-purpose building element (320) preferably use a self-organizing feature map (SOFM) neural network algorithm, as known in the art - see e.g. *"*Neural Neworks: A Comprehensive Foundation", by Simon Haykin, Prentice Hall, 2nd edition (July 16, 1998), ISBN-13: 978-0132733502. The SOFM algorithm uses an array of artificial neurons wherein each artificial neuron corresponds to a cell, the artificial neurons being arranged according to the exact same topology as the array of cells of the assembly of four building elements. The SOFM is then trained over time by using as input to the SOFM the same ten lowest-order principal components (FIG. 20B) extracted over time. As well-known in the art, as the SOFM is trained, the 10-dimensional weight vector of each of its artificial neurons changes, so that different parts of the SOFM respond differently to a given input, and so that any given part of the SOFM responds similarly to similar inputs. Preferably after some training has been performed as described above, the coordinates of the weight vector of each artificial neuron in the SOFM are then used as the coordinates of the reference vector (520A-C) of the corresponding cell in the assembly.

The method illustrated in FIG. 19 is then further executed so that a distance between an input vector (522A-C) and a reference vector (520A-C) is assigned to the state of each cell in the assembly. For a better visual effect, the states of the cells are normalized between zero and one across all four building elements 100-103 in the assembly, so that state one represents the minimum distance and state zero represents the maximum distance between an input vector (522A-C) and its corresponding reference vector (520A-C) across the entire assembly. This normalization requires modest amounts of data to be broadcasted across all building elements, preferably via the global bus (192).

In FIG. 20C, the assembly of four building elements 100-103 is shown, each comprising 9x16 display segments (121), wherein the shade of gray displayed in each display segment corresponds to the normalized state of the associated cell, white corresponding to normalized state one, and black corresponding to normalized state zero. Therefore, light shades of gray correspond to shorter distances, while darker shades of gray correspond to longer distances. Finally, FIG. 20D illustrates the same assembly of four building elements 100-103 with the same cell states of FIG. 20C, but after image post-processing is performed, said image post-processing comprising bilinear interpolation and a color-map transformation as described earlier. It should be noted in FIG. 20 C or D that cells in building element 100 respond most strongly, i.e. are associated to reference vectors of shortest distance, to the given input vector coordinates illustrated in FIG. 20B; it can then be said that the input vector coordinates illustrated in FIG. 20B are "mapped onto" said cells in building element 100.

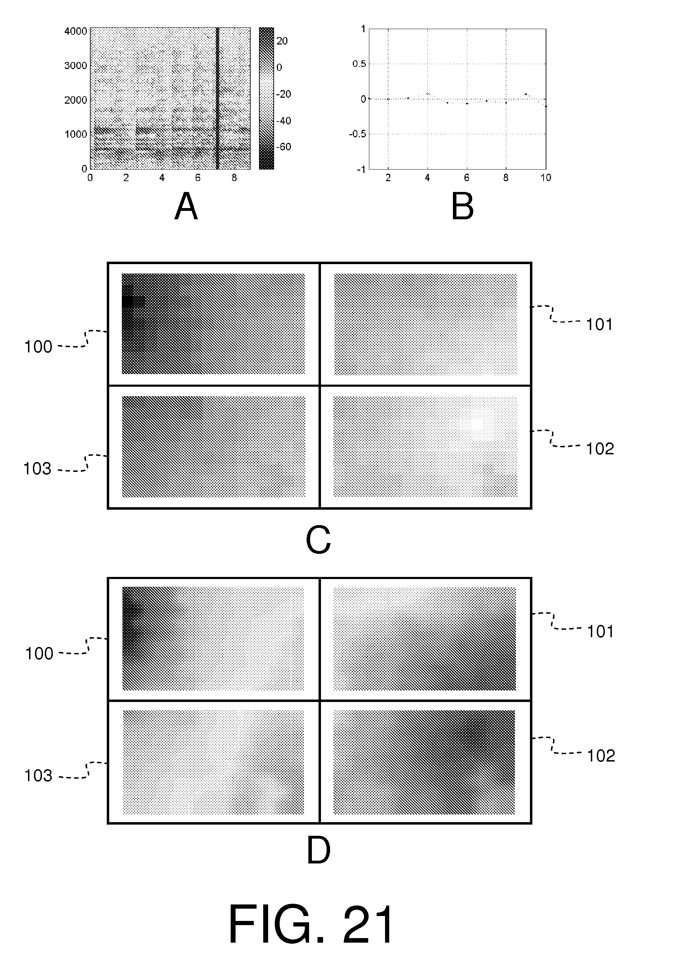

FIG. 21 A to D are analogous to FIG.20 A to D, respectively. However, as shown by the vertical bar in FIG. 21A and the ten coordinates illustrated in FIG. 21B, this time a different part of Handel's "Hallelujah" is under consideration. For this reason, it should be noted that, this time, cells in building element 102 of the assembly respond most strongly, i.e. are associated to reference vectors of shortest distance, to the given input vector coordinates; it can then be said that said input vector coordinates are "mapped onto" said cells in building element 102.

It should be noted that the only display segment data communicated between building elements in FIG. 18A-B are those required by the bilinear interpolation algorithm used in post-processing, given the footprint it entails. No cell neighborhood is used for determining the state of a cell. The cell states are determined depending on information (namely, input and reference vector coordinates) broadcasted to all building elements by either a computer system (300) or a special-purpose building element (320), and not on display segment data communicated from adjacent building elements.

The embodiment described in the three previous paragraphs and FIG. 19-21 cause different regions of the apparently continuous virtual single display of an assembly of building elements to respond distinctly to a given environment sound, and any given region of the apparently continuous virtual single display to respond similarly to similar environment sounds. This is achieved by using a SOFM algorithm to map sound onto the topology of the display segments comprised in the apparently continuous virtual single display. Generally speaking, such a topological mapping entails capturing and preserving the proximity and similarity relationships of the input data in the visual patterns displayed in the apparently continuous virtual single display. This way, e.g. two similar environment stimuli will tend to be "mapped onto" physically nearby display segments, while two different environment stimuli will tend to be mapped onto display segments physically farther away from each other. Since a SOFM is an adaptive method, such topological mapping changes over time depending on the statistical characteristics of the stimuli captured. Such dynamic behavior is advantageous for generating visual content in the context of the present invention, for it reduces the predictability of the visual patterns. The use of SOFM algorithms to map sounds onto topologies is, in itself, known in the art (see e.g. "Visualization of Tonal Content with Self-Orgaizing Maps and Self-Similarity Matrices," by Petri Toiviainen, in ACM Computers in Entertainment, Vol. 3, No. 4, October 2005); the present invention allows the visual effect associated to analogous uses of SOFM algorithms to be scaled across multiple displays, filling up substantially arbitrary shapes and sizes. Many other variations of said embodiment are also possible, like: (a) instead of principal component analysis, any other dimensionality reduction method can be used to advantage; (b) instead of performing the computations associated to training the SOFM entirely in the computer system (300) or the special-purpose building element (320), methods can be envisioned for distributing the computations associated to training the SOFM across multiple building elements, so to improve speed; (c) it is possible to combine the embodiment in FIG. 19-21 with that of e.g. FIG. 18: for instance, the cell (127A-C) which reference vector (520A-C) has the shortest distance to the input vector (522A-C) may define the display segment (121) where a "disturbance" (202, 204) is introduced to the "liquid surface"; etc. All of said variations are within the scope of claim 11. As a matter of fact, those skilled in the art will know of many ways of combining multiple and various ones of the embodiments of the present invention without departing from the scope of the appended claims.

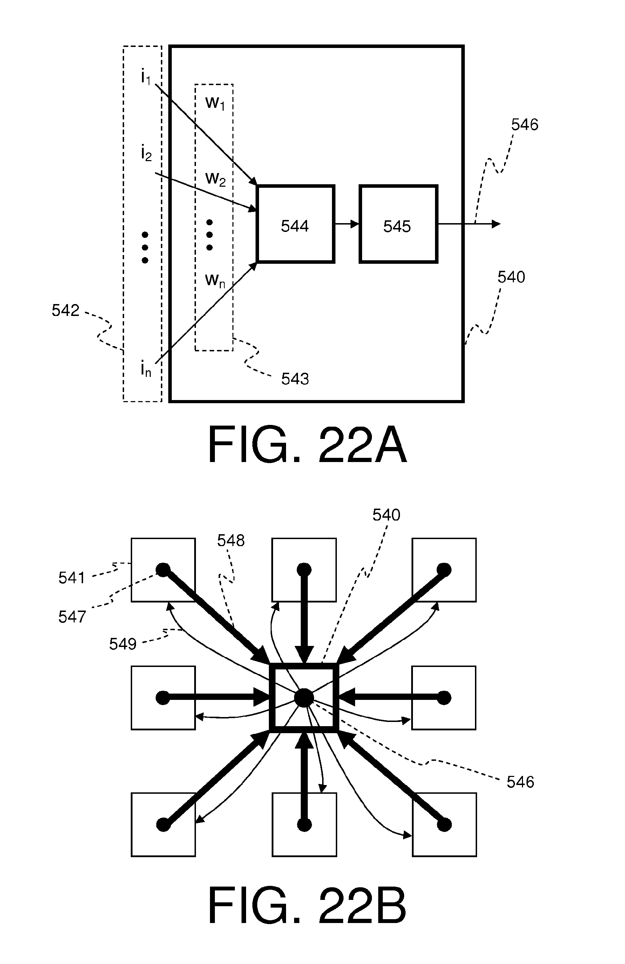

FIG. 22A schematically illustrates a basic architecture of an artificial neuron 540. Such artificial neuron architecture is well-known in the art and repeated here merely for reference. Artificial neuron 540 comprises a weight vector 543 with n coordinates (or "weights") W₁-Wₙ, linear processing means 544, and a transfer function means 545. Artificial neuron 540 also receives an input vector 542 with n coordinates (or "inputs") I₁-Iₙ. Preferably, linear processing means 544 performs a dot product of the input vector 542 with the weight vector 543. Preferably, the transfer function means 545 performs a non-linear transformation of the output of the linear processing means 544. The output of the transfer function means 545 is also the neuron output 546 of the artificial neuron 540. An artificial neuron 540 can have a hardware embodiment but is, preferably, simply an algorithmic element.

FIG. 22B schematically illustrates how the artificial neuron shown in FIG. 22A can be advantageously used in an image generation algorithm. A neural network of only nine artificial neurons is shown for the sake of clarity and brevity, but any number of artificial neurons is analogously possible. FIG. 22B shows only how a central artificial neuron 540 in the neural network is connected to adjacent artificial neurons 541; it is assumed that all artificial neurons in the neural network are also connected in analogous ways to their respective adjacent artificial neurons. Neuron outputs 547 of adjacent artificial neurons 541 are connected via neuron connections 548 to the input vector (542) of artificial neuron 540. Neuron output 546 is then calculated according to e.g. the scheme in FIG. 22A and connected via neuron connections 549 to the adjacent artificial neurons 541. Each artificial neuron in the neural network is preferably associated to a cell, said association entailing that the neuron output 546 of each artificial neuron at least partly determines the state of the associated cell. This way, an image frame can be generated depending on the states of said cells according to any of the embodiments described for the image generation algorithm. It should be noted that the scheme illustrated in FIG. 22B entails a "Moore Neighborhood" for calculating the next state of a cell, since the input vector (542) of each artificial neuron 540 is connected only to the outputs 547 of all of its adjacent artificial neurons.

It should also be noted that the weight vectors (543), as well as other internal parameters of artificial neurons in a neural network, typically change over time according to any of the "learning paradigms" and learning algorithms used in the art for training a neural network. In fact, such a capability of adaptation is a reason for advantageously using artificial neurons in the present invention. The artificial neurons are preferably trained according to an "unsupervised learning" or a "reinforcement learning" paradigm, so to maintain a degree of unpredictability in the visual content generated. The embodiment in FIG. 22B differs from a cellular automaton algorithm in at least two distinct ways: (a) the mathematical transformation performed by an artificial neuron on its inputs, as determined e.g. by its weight vector (543), can differ from that performed by another artificial neuron in the neural network - which may e.g. have an entirely different weight vector. In other words, unlike in a cellular automaton, the evolution of the states of different cells can be governed by respectively different sets of rules; and (b) unlike a cellular automata algorithm, which use a static set of rules for determining cell state transitions, the mathematical transformation performed by an artificial neuron on its inputs can change over time, depending on the learning algorithm selected as well as on the inputs presented to said artificial neuron over time.

The embodiment in FIG. 22B is merely a simple example of how artificial neurons can be used as part of the image generation algorithm. Many other embodiments can be advantageous, like: (a) using an amalgamation of the neuron outputs of multiple artificial neurons organized in multiple layers to determine the state of a cell; (b) using neural network schemes with feedback mechanisms, as known in the art; (c) connecting a given artificial neuron to other artificial neurons that are not necessarily adjacent to said given artificial neuron in the topology of the neural network; etc. Those skilled in the art will know of many advantageous ways to deploy artificial neurons in the image generation algorithm, without departing from the scope of claim 10.

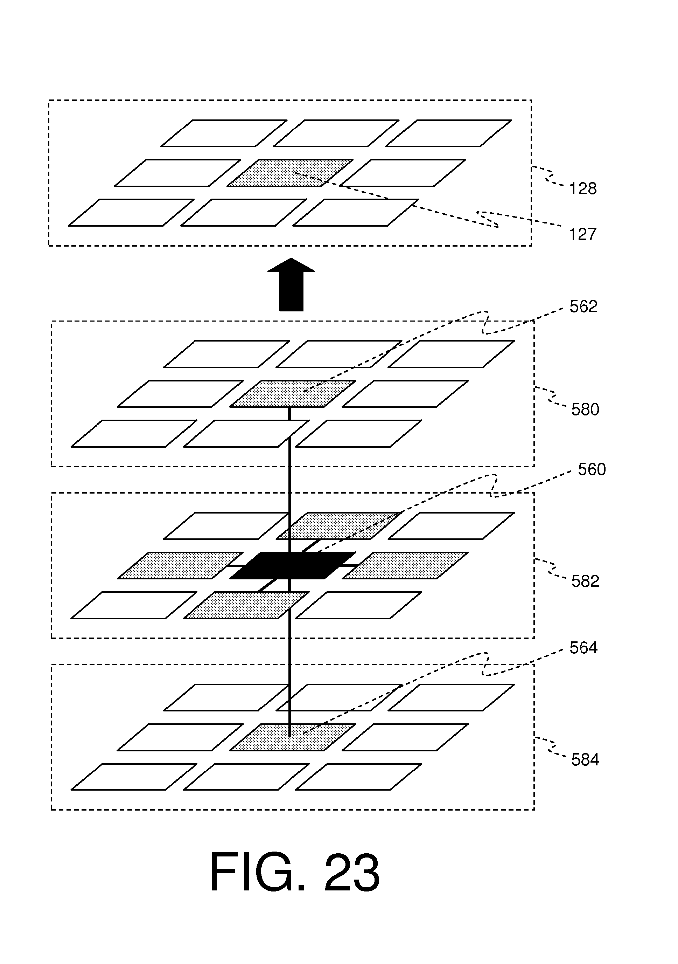

FIG. 23 shows schematically how multiple methods for generating visual content can be combined by means of using multiple layers of cells. Only three layers of cells 580, 582 and 584 are shown for the sake of clarity and brevity, but any number of layers of cells is analogously possible. Each layer of cells can comprise a different algorithm for determining its cell state transitions - e.g. a layer of cells 582 can be governed by a cellular automaton algorithm like e.g. that illustrated in FIG. 18, while another layer of cells 580 is governed by a different algorithm, like e.g. the method illustrated in FIG. 19-21. It is also possible that a specific layer of cells 584 be used for inputting external data in the form of cell states, without being governed by any state transition algorithm. The frame segment displayed in a display segment 127 of a display 128 can now depend on the states of a plurality of associated cells 560, 562, and 564, each comprised in a different layer of cells. Therefore, as claimed in claim 3, in this embodiment the display segment data associated to a display segment, as referred to in claim 1, comprises the states of a plurality of cells. In an embodiment, display segment 127 comprises a single physical pixel, the color/intensity displayed in said physical pixel being determined by red, green, and blue (RGB) color channels, the value of each color channel corresponding to the state of each of cells 560, 562, 564; In another embodiment, the normalized average of the states of cells 560, 562, 564 is taken for determining the visual content to be displayed in display segment 127; many other embodiments can be designed for determining the visual content to be displayed in a display segment depending on a plurality of cell states associated to said display segment. In addition, the cell neighborhoods defined for a given layer of cells can comprise cells from other layers of cells, as illustrated by the highlighted cells in FIG. 23 that are comprised in an example cell neighborhood of cell 560; although cell 560 is comprised in layer of cells 582, its example cell neighborhood comprises cell 562 in layer of cells 580, as well as cell 564 in layer of cells 584. This way, multiple algorithms for determining cell state transitions can be coupled together across different layers of cells.

Naturally, a virtually unlimited number of potentially advantageous schemes exist for determining visual content on the basis of a combination of cell states across multiple layers of cells, as well as for determining cell neighborhoods that span across different layers of cells. Those skilled in the art will be able to devise many advantageous embodiments without departing from the scope of claim 3. For example, the work of new media artists, particularly those involved in generative art, like Australian Jonathan McCabe, American Scott Draves, and Dutch Erwin Driessens & Maria Verstappen, embody various intricate schemes for combining together multiple image-generation algorithms across layers of cells to produce images and animations of highly-decorative value (see e.g. *"*Metacreation: Art and Artificial Life", by Mitchell Whitelaw, The MIT Press (April 1, 2006), ISBN-13: 978-0262731768, especially chapter 5, "Abstract Machines"). When used within the context of the present invention, the images and animations produced by means of said intricate schemes can be displayed in arbitrary shapes and sizes, as well as be seamlessly integrated into building surfaces in the context of architecture and interior design.

The algorithms for generating visual content described in the paragraphs above, and corresponding to FIG. 14 to FIG. 23, are preferably implemented as program code or configuration parameters computed in the respective embedded processing systems (140) of the corresponding building elements (100).

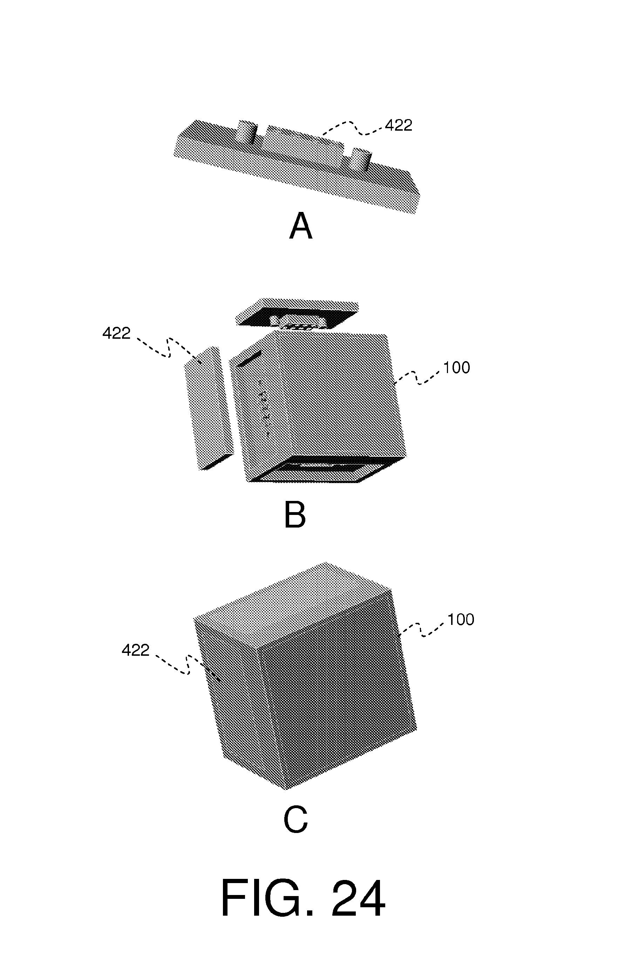

FIG. 24A illustrates a special-purpose detachable attachment means 422 used for aesthetical purposes. As shown in FIG. 24B, said special-purpose detachable attachment means 422 is used for covering a connection mechanism (178) on an external surface of a building element 100; it is not used for coupling two building elements together mechanically or electromagnetically. As depicted in FIG. 24C, after the special-purpose detachable attachment means is accommodated into a connection mechanism on an external surface of a building element 100, said external surface becomes flat and regular as if no connection mechanism were present. This is advantageous for aesthetical reasons on the uncoupled edges of an assembly.

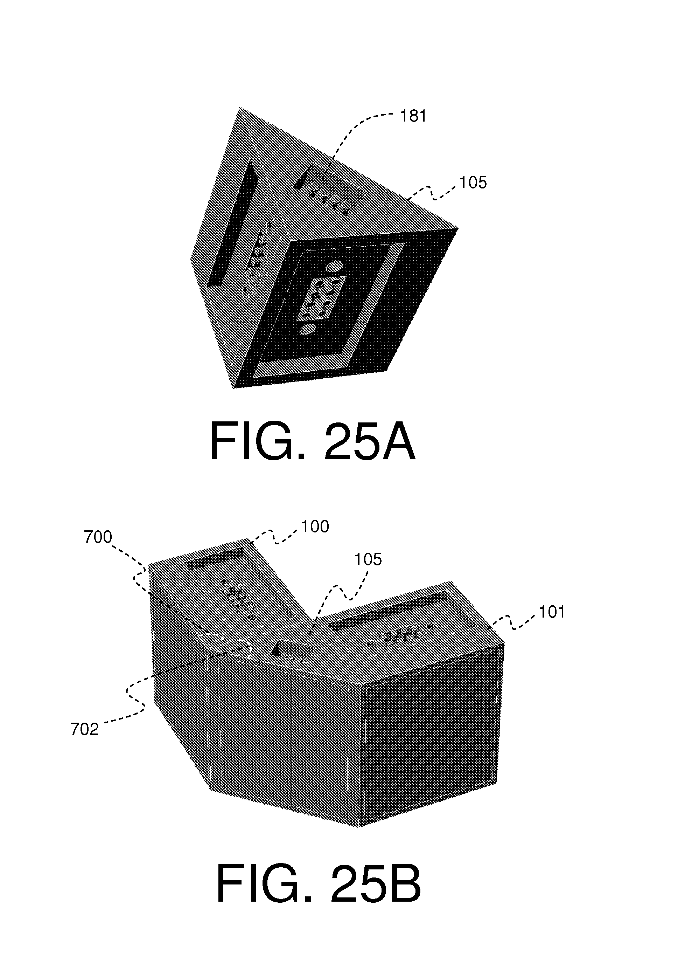

FIG. 25A shows a building element 105 wherein the external surface comprising the display is at an angle with the external surfaces along which building element 105 can be coupled with other building elements, said angle being different from 90 degrees. FIG. 25A also illustrates a communication port 181 at the bottom of a cavity with reduced surface area due to space limitations on the associated external surface of the building element 105. FIG. 25B shows how the special-shape building element 105 can be used for e.g. turning corners or, more generally, adding angles to the apparently continuous virtual single display formed by an assembly of building elements 100, 105, and 101 without breaking the apparent continuity of the virtual single display. This is advantageous when it is desired to e.g. substantially cover a building surface that comprises bends, angles, or other changes of surface direction. FIG. 25B also illustrates how the angle 702 between the display and an external surface of building element 105 is different from the 90-degree angle 700 between the respective display and external surface of building element 100, as well as the effect thereof in the overall shape of the assembly.

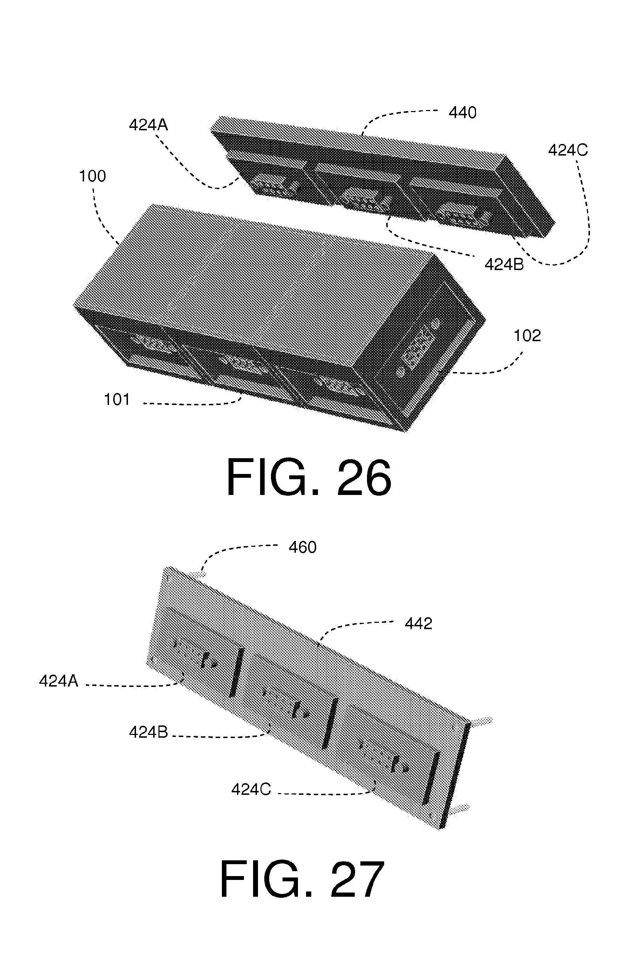

FIG. 26 shows how a plurality of special-purpose detachable attachment means 424A-C can be affixed to a mechanically-stable board 440, before being accommodated into the connection mechanisms (178) of a row or column of building elements 100, 101, 102. Only three building elements are shown for the sake of clarity and simplicity, but any number of building elements is analogously possible. The use of board 440 is advantageous for it provides for a longer range of mechanical stability to the coupling of multiple building elements together.

FIG. 27 illustrates how a board 442, comprising special-purpose detachable attachment means 424A-C affixed to it, can also comprise affixation means 460 for affixing said board 442 to a building surface like e.g. a wall or a ceiling. Affixation means 460 preferably comprises a screw. This embodiment provides for a stable mechanical bond between a building surface (e.g. wall, ceiling, or floor) and an external surface of an assembly of building elements.

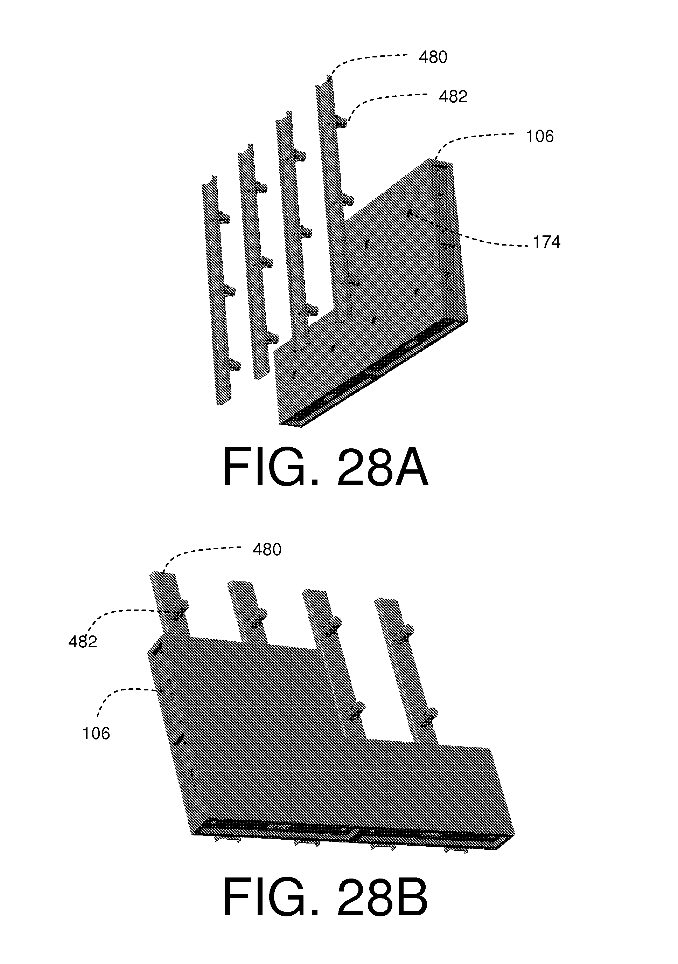

FIG. 28 A and B illustrate respectively the back and front views of a plurality of support structures 480, each support structure comprising third attachment means 482 analogous in function to masonry tile adhesive; i.e. the third attachment means 482 plays the role of holding a building element in place when it is placed against a support structure. FIG. 28 A and B also illustrate respectively the back and front views of an assembly of building elements 106, each with an aspect ratio similar to that of a masonry tile, i.e. a relatively broad external front surface compared to its thickness. The external back surface of each building element 106 comprises second attachment means 174 that can be mechanically attached to third attachment means 482. Alternatively, the attachment between second attachment means 174 and third attachment means 482 can be e.g. magnetic. This way, the building elements 106 are coupled to each other via their external side surfaces and detachable attachment means (420), as well as attached to the support structures 480 via their external back surfaces and second attachment means 174. Preferably, the support structures 480 are affixed to a building surface (e.g. wall, ceiling, or floor) by means of e.g. screws, nails, or mechanical pressure. In an embodiment, the support structures 480 and associated third attachment means 482 are used to provide electrical power to the building elements 106.

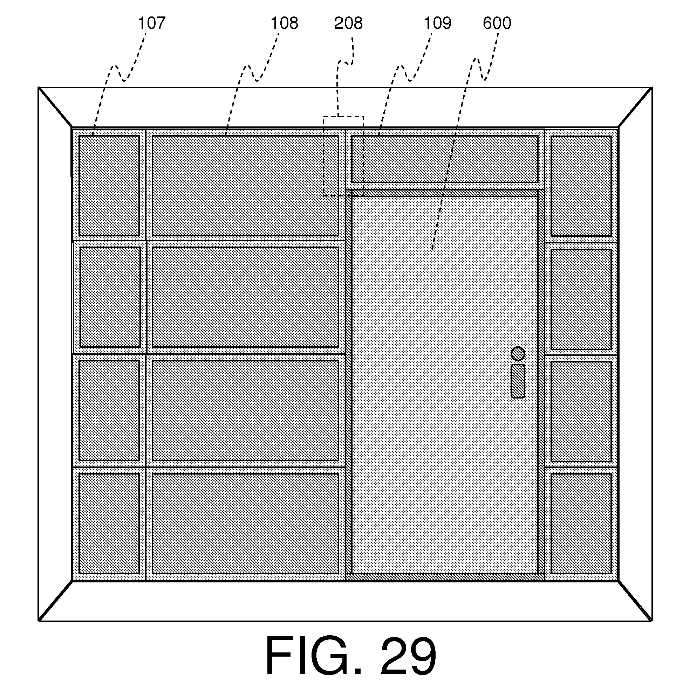

FIG. 29 illustrates how an irregular building wall comprising a door 600 can be substantially covered with building elements by using building elements of different sizes and shapes, as well as the scheme illustrated in FIG. 28A-B. The support structures (480) are affixed to the wall, being located behind the building elements in FIG. 29 and, therefore, not visible. Specifically, three different types of building elements exemplified by building elements 107, 108, and 109 are used, each with a different shape or size. It should also be noted that certain couplings 208 between building elements have to take into account differences in size or shape between the respective building elements.

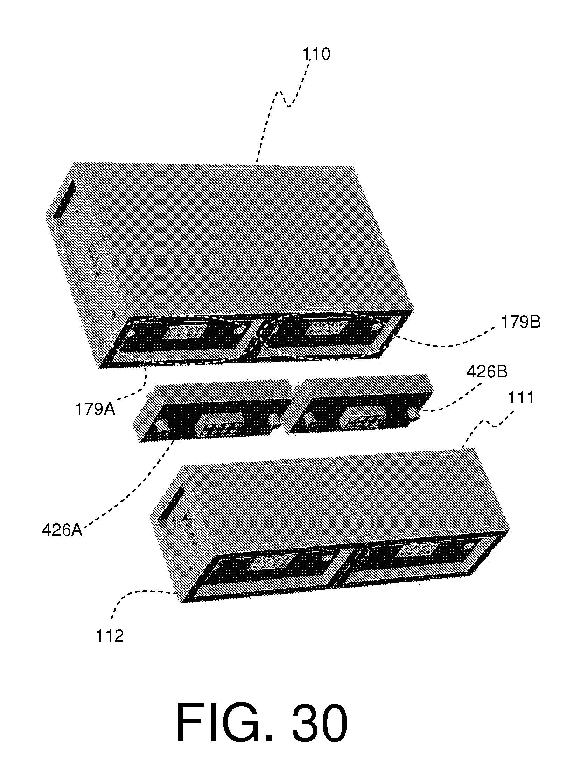

FIG. 30 illustrates an example scheme for coupling building elements of different shapes and sizes together. A larger building element 110 comprises a plurality of connection mechanisms 179A and 179B on single one of its external surfaces. Through the use of a plurality of detachable attachment means 426A and 426B, the larger building element 106 is coupled to a plurality of smaller building elements 111 and 112 along a single one of its external surfaces.

It should be noted that the above-mentioned embodiments illustrate rather than limit the invention, and that those skilled in the art will be able to design many alternative embodiments without departing from the scope of the appended claims. It should also be noted that, although the description above is motivated by an application of the present invention in the context of architecture and interior design, those skilled in the art will be able to design advantageous embodiments for using the present invention in other fields or for other applications (e.g. games and toys) without departing from the scope of the appended claims. In the claims, any reference signs placed between parentheses shall not be construed as limiting the claim. The words "comprising" or "comprises" do not exclude the presence of elements or steps other than those listed in the claim. The word "a" or "an" preceding an element or step does not exclude the presence of a plurality of such elements or steps. When a first element or step is said to "depend on" a second element or step, said dependency does not exclude that the first element or step may also depend on one or more other elements or steps. The mere fact that certain measures are recited in mutually different dependent claims does not indicate that a combination of these measures cannot be used to advantage.

## Claims

1. A building element apparatus (100) comprising:
a display (120) for displaying visual content; and
an embedded processing system (140) for generating the visual content according to an image generation algorithm;
**characterized in that**:
the display is divided into a plurality of display segments (121);
the embedded processing system is arranged to generate a first part of the visual content for display in a first display segment of the plurality of display segments depending on first display segment data, and to generate a second part of the visual content for display in a second display segment of the plurality of display segments depending on further, second display segment data;
in an operational state, when coupled with one or more adjacent similar building element apparatuses (101) the building element apparatus is arranged to communicate the first and/or the second display segment data with at least one of the adjacent similar building element apparatuses; and
in an operational state, when coupled with one or more adjacent similar building element apparatuses the building element apparatus is further arranged to generate at least a part of the visual content depending on display segment data communicated from at least one of the adjacent similar building element apparatuses.

2. A building element apparatus as claimed in claim 1, **characterized in that**, in an operational state, when coupled with a first (101) and a second (103) adjacent similar building element apparatuses the building element apparatus is arranged to communicate display segment data received from the first adjacent similar building element apparatus to the second adjacent similar building element apparatus.

3. A building element apparatus as claimed in any of the preceding claims, **characterized in that**
the first display segment data comprises a plurality of data (562, 560, 564),
each data of said plurality of data being comprised in a different array of data (580, 582, 584) of a plurality of arrays of data.

4. A building element apparatus as claimed in claim 3, **characterized in that** the image generation algorithm comprises
at least a first algorithm operating on data comprised in a first array of data of the plurality of arrays of data, and
a further, second algorithm operating on data comprised in a second array of data of the plurality of arrays of data.

5. A building element apparatus (103) as claimed in any of the preceding claims, **characterized in that** the embedded processing system is arranged to generate new display segment data associated to a display segment (123) of the plurality of display segments depending mostly on display segment data associated to display segments (122) of the plurality of display segments that are physically near said display segment.

6. A building element apparatus as claimed in any of the preceding claims, **characterized in that** the image generation algorithm comprises a cellular automaton.

7. A building element apparatus as claimed in any of the preceding claims, **characterized in that** the embedded processing system is arranged to generate visual content depending on an external stimulus (362, 342).

8. A building element apparatus as claimed in claim 7, **characterized in that** the image generation algorithm comprises a topological mapping of the external stimulus (362) onto a display segment of the plurality of display segments.

9. A building element apparatus as claimed in any of the preceding claims, **characterized in that** the image generation algorithm comprises a computational intelligence algorithm.

10. A building element apparatus as claimed in claim 9, **characterized in that** the computational intelligence algorithm comprises an artificial neuron (540).

11. A building element apparatus as claimed in any of the preceding claims, **characterized in that** the image generation algorithm comprises:
calculating a distance between a reference vector (520A) and an input vector (522A); and
generating new display segment data associated to a display segment of the plurality of display segments depending on said distance.

12. A building element apparatus as claimed in any of the preceding claims, **characterized in that** the image generation algorithm comprises an image post-processing algorithm.

13. A building element apparatus as claimed in any of the preceding claims, **characterized in that** the building element apparatus further comprises:
one or more communication ports (180); and
one or more connection lines (160) for connecting one or more of the communication ports to the embedded processing system (140);

14. A building element apparatus as claimed in claim 13, **characterized in that** one or more of the communication ports (180A, 180B) and one or more of the connection lines (165A, 165B) are arranged to form part of a local neighbor-to-neighbor communications network (190A, 190B).

15. A building element apparatus as claimed in claims 13 or 14, **characterized in that** one or more of the communication ports (180A, 180B) and one or more of the connection lines (164A, 164B, 167) are arranged to form part of a global bus (192).

16. A building element apparatus as claimed in any one of claims 13 to 15, **characterized in that**
a communication port (180A, 180B) comprises one or more individual communication lines,
one or more of said individual communication lines (185A, 185B, 186A, 186B) being arranged to form part of a power supply bus.

17. A building element apparatus as claimed in any one of claims 13 to 16, **characterized in that**
the building element apparatus comprises a plurality of external surfaces,
at least one external surface of said plurality of external surfaces comprising a connection mechanism (178),
said connection mechanism comprising at least one of the communication ports.

18. A building element apparatus as claimed in claim 17, **characterized in that** the connection mechanism comprises a cavity (170), wherein detachable attachment means (420, 422, 424A) can be accommodated.

19. A building element apparatus (110) as claimed in claims 17 or 18, **characterized in that** an external surface of the plurality of external surfaces comprises a plurality of connection mechanisms (179A, 179B).

20. A building element apparatus (106) as claimed in any one of claims 17 to 19, **characterized in that**
the building element apparatus comprises a second attachment means (174) on a first external surface of the plurality of external surfaces,
said first external surface being opposite to a second external surface of the plurality of external surfaces,
said second external surface comprising the display.

21. A building element apparatus as claimed in any one of claims 17 to 19, **characterized in that**:
a first external surface of the plurality of external surfaces comprises the display; and
a second external surface of the plurality of external surfaces comprises a further display.

22. A building element apparatus (105) as claimed in any one of claims 17 to 19, **characterized in that**
the at least one external surface comprising a connection mechanism (178) forms an angle (702) with a second external surface of the plurality of external surfaces,
said second external surface comprising the display,
said angle being different from 90 degrees.

23. A building element apparatus as claimed in any of the preceding claims, **characterized in that** the display is a reflective display.

24. A building element apparatus as claimed in 23, **characterized in that** the reflective display comprises electronic paper.

25. A method for generating and displaying visual content, the method comprising the steps of:
providing a means for generating visual content;
providing a display for displaying the visual content;
providing one or more adjacent similar means for generating adjacent visual content; and
providing means for communicating data between the means for generating visual content and the adjacent similar means for generating adjacent visual content;
**characterized in that** the method further comprises:
dividing the display into a plurality of display segments;
generating a first part of the visual content for display in a first display segment of the plurality of display segments depending on first display segment data, and generating a second part of the visual content for display in a second display segment of the plurality of display segments depending on further, second display segment data;
communicating the first and/or the second display segment data with at least one of the adjacent similar means for generating adjacent visual content; and
generating at least a part of the visual content depending on display segment data communicated from at least one of the adjacent similar means for generating adjacent visual content.

## Amended claims

### Amended claims in accordance with Rule 137(2) EPC.

**1.** A building element apparatus (100) comprising a display (120) for displaying visual content and an embedded processing system (140) for generating the visual content according to an image generation algorithm,
wherein:
the display is divided into a plurality of display segments (121);
the image generation algorithm operates on the states of a plurality of cells, each cell of said plurality of cells corresponding to a display segment of the plurality of display segments;
the embedded processing system is arranged to generate a first part of the visual content for display in a first display segment of the plurality of display segments depending on a state of a first cell of the plurality of cells, and to generate a second part of the visual content for display in a second display segment of the plurality of display segments depending on a state of a further, second cell of the plurality of cells;
in an operational state, when coupled with one or more adjacent similar building element apparatuses (101), the building element apparatus is arranged to communicate a state of the first and/or the second cell with at least one of the adjacent similar building element apparatuses; and
in an operational state, when coupled with one or more adjacent similar building element apparatuses, the building element apparatus is further arranged to generate at least a part of the visual content depending on one or more cell states communicated from at least one of the adjacent similar building element apparatuses;
**characterized in that**:
the image generation algorithm comprises a plurality of iterations;
each iteration of said plurality of iterations comprises assigning a first updated state to the first cell and a further, second updated state to the second cell, said first and second updated states depending on one or more states of one or more further cells of the plurality of cells;
wherein the first updated state depends more on states of cells, from said one or more further cells, corresponding to display segments of the plurality of display segments that are physically near the first display segment than on states of cells, from said one or more further cells, corresponding to display segments of the plurality of display segments that are not physically near the first display segment; and
wherein the second updated state depends more on states of cells, from said one or more further cells, corresponding to display segments of the plurality of display segments that are physically near the second display segment than on states of cells, from said one or more further cells, corresponding to display segments of the plurality of display segments that are not physically near the second display segment.

**2.** A building element apparatus as claimed in claim 1, **characterized in that**, in an operational state, when coupled with an adjacent similar building element apparatus,
the building element apparatus is arranged to generate visual content that comprises a substantial visual pattern,
whereby said substantial visual pattern is visually coherent with a further substantial visual pattern comprised in visual content generated in the adjacent similar building element apparatus. (206)

**3.** A building element apparatus as claimed in any of the preceding claims, **characterized in that**
the image generation algorithm comprises a rule for assigning an updated state to a cell of the plurality of cells in an iteration of the plurality of iterations,
said rule changing in a subsequent iteration of the plurality of iterations.

**4.** A building element apparatus as claimed in any of the preceding claims,
**characterized in that**:
the image generation algorithm comprises a first rule for assigning an updated state to a cell of the plurality of cells in a given iteration of the plurality of iterations; and
the image generation algorithm further comprises a further, second rule for assigning an updated state to a further cell of the plurality of cells in said given iteration of the plurality of iterations.

**5.** A building element apparatus as claimed in any of the preceding claims, **characterized in that**, in an operational state, when coupled with a first (101) and a second (103) adjacent similar building element apparatuses, the building element apparatus is arranged to communicate a cell state received from the first adjacent similar building element apparatus to the second adjacent similar building element apparatus.

**6.** A building element apparatus as claimed in any of the preceding claims,
**characterized in that**:
the first cell (560) is comprised in a first 2-dimensional array of cells (582) of the plurality of cells;
the image generation algorithm is arranged so a state of the first cell depends on a state of a further cell (562, 564) comprised in a further, second 2-dimensional array of cells (580, 584) of the plurality of cells;
the image generation algorithm comprises a first algorithm operating on states of cells comprised in said first 2-dimensional array of cells; and
the image generation algorithm further comprises a further, second algorithm operating on states of cells comprised in said second 2-dimensional array of cells.

**7.** A building element apparatus as claimed in any of the preceding claims, **characterized in that** the image generation algorithm comprises a cellular automaton.

**8.** A building element apparatus as claimed in any of the preceding claims, **characterized in that** the embedded processing system is arranged to generate visual content depending on an external stimulus (362, 342).

**9.** A building element apparatus as claimed in claim 8, **characterized in that** the image generation algorithm comprises a topological mapping of the external stimulus (362) onto a display segment of the plurality of display segments.

**10.** A building element apparatus as claimed in any of the preceding claims, **characterized in that** the image generation algorithm comprises a computational intelligence algorithm.

**11.** A building element apparatus as claimed in claim 10, **characterized in that** the computational intelligence algorithm comprises an artificial neuron (540).

**12.** A building element apparatus as claimed in any of the preceding claims,
**characterized in that** the image generation algorithm comprises:
calculating a distance between a reference vector (520A) and an input vector (522A); and
assigning an updated state to a cell of the plurality of cells depending on said distance.

**13.** A building element apparatus as claimed in any of the preceding claims, **characterized in that** the image generation algorithm comprises an image post-processing algorithm.

**14.** A building element apparatus as claimed in any of the preceding claims,
**characterized in that** the building element apparatus further comprises:
one or more communication ports (180); and
one or more connection lines (160) for connecting one or more of the communication ports to the embedded processing system (140);

**15.** A building element apparatus as claimed in claim 14, **characterized in that** one or more of the communication ports (180A, 180B) and one or more of the connection lines (165A, 165B) are arranged to form part of a local neighbor-to-neighbor communications network (190A, 190B).

**16.** A building element apparatus as claimed in claims 14 or 15, **characterized in that** one or more of the communication ports (180A, 180B) and one or more of the connection lines (164A, 164B, 167) are arranged to form part of a global bus (192).

**17.** A building element apparatus as claimed in any one of claims 14 to 16, **characterized in that**
a communication port (180A, 180B) comprises one or more individual communication lines,
one or more of said individual communication lines (185A, 185B, 186A, 186B) being arranged to form part of a power supply bus.

**18.** A building element apparatus as claimed in any one of claims 14 to 17, **characterized in that**
the building element apparatus comprises a plurality of external surfaces,
at least one external surface of said plurality of external surfaces comprising a connection mechanism (178),
said connection mechanism comprising at least one of the communication ports.

**19.** A building element apparatus as claimed in claim 18, **characterized in that** the connection mechanism comprises a cavity (170), wherein detachable attachment means (420, 422, 424A) can be accommodated.

**20.** A building element apparatus (110) as claimed in claims 18 or 19, **characterized in that** an external surface of the plurality of external surfaces comprises a plurality of connection mechanisms (179A, 179B).

**21.** A building element apparatus (106) as claimed in any one of claims 18 to 20, **characterized in that**
the building element apparatus comprises a second attachment means (174) on a first external surface of the plurality of external surfaces,
said first external surface being opposite to a second external surface of the plurality of external surfaces,
said second external surface comprising the display.

**22.** A building element apparatus as claimed in any one of claims 18 to 20,
**characterized in that**:
a first external surface of the plurality of external surfaces comprises the display; and
a second external surface of the plurality of external surfaces comprises a further display.

**23.** A building element apparatus (105) as claimed in any one of claims 18 to 20, **characterized in that**
the at least one external surface comprising a connection mechanism (178) forms an angle (702) with a second external surface of the plurality of external surfaces,
said second external surface comprising the display,
said angle being different from 90 degrees.

**24.** A building element apparatus as claimed in any of the preceding claims, **characterized in that** the display is a reflective display.

**25.** A method for generating and displaying visual content, the method comprising the steps of:
providing a means for generating visual content;
providing a display for displaying the visual content;
providing one or more adjacent similar means for generating adjacent visual content;
providing means for communicating data between the means for generating visual content and the adjacent similar means for generating adjacent visual content;
dividing the display into a plurality of display segments;
providing a plurality of cells, each cell of said plurality of cells corresponding to a display segment of the plurality of display segments, each cell of said plurality of cells also holding a state;
generating a first part of the visual content for display in a first display segment of the plurality of display segments depending on a state of a first cell of the plurality of cells, and generating a second part of the visual content for display in a second display segment of the plurality of display segments depending on a state of a further, second cell of the plurality of cells;
communicating a state of the first and/or the second cell with at least one of the adjacent similar means for generating adjacent visual content; and
generating at least a part of the visual content depending on one or more cell states communicated from at least one of the adjacent similar means for generating adjacent visual content;
**characterized in that** the method further comprises the steps of:
carrying out a plurality of iterations; and
in each iteration of said plurality of iterations, assigning a first updated state to the first cell and a further, second updated state to the second cell, said first and second updated states depending on one or more states of one or more further cells of the plurality of cells,
whereby the first updated state depends more on states of cells, from said one or more further cells, corresponding to display segments of the plurality of display segments that are physically near the first display segment than on states of cells, from said one or more further cells, corresponding to display segments of the plurality of display segments that are not physically near the first display segment, and
whereby the second updated state depends more on states of cells, from said one or more further cells, corresponding to display segments of the plurality of display segments that are physically near the second display segment than on states of cells, from said one or more further cells, corresponding to display segments of the plurality of display segments that are not physically near the second display segment.
